# EUROPÄISCHE PATENTSCHRIFT

(11) **EP 2 104 794 B1**
(45) Veröffentlichungstag und Bekanntmachung des Hinweises auf die Patenterteilung: **01.12.2010**
(21) Anmeldenummer: 05759940.9
(22) Anmeldetag: 13.07.2005
(51) Int. Cl.: F16H 61/00, F16H 63/48

(54) **FAHRZEUGGETRIEBE MIT EINER PARKSPERRE UND VERFAHREN ZUR STEUERUNG DESSELBEN**
VEHICLE TRANSMISSION COMPRISING A PARKING BRAKE, AND METHOD FOR CONTROLLING THE SAME
TRANSMISSION DE VEHICULE COMPORTANT UN FREIN DE STATIONNEMENT, ET PROCEDE POUR COMMANDER CETTE TRANSMISSION DE VEHICULE

(30) Priorität: 08.09.2004 DE 102004043416
(43) Veröffentlichungstag der Anmeldung: 30.09.2009
(73) Patentinhaber: ZF Friedrichshafen AG, 88038 Friedrichshafen (DE)
(72) Erfinder: SCHIELE, Peter, 88079 Kressbronn (DE); ZIEMER, Peter, 88069 Tettnang (DE)
(86) Internationale Anmeldenummer: PCT/EP2005/007621
(87) Internationale Veröffentlichungsnummer: WO 2006/027042

(56) Entgegenhaltungen:
- DE-A1- 10 255 714
- US-B1- 6 354 422
- PATENT ABSTRACTS OF JAPAN Bd. 2003, Nr. 02, 5. Februar 2003 (2003-02-05) & JP 2002 295657 A (AISIN AW CO LTD), 9. Oktober 2002 (2002-10-09)
- PATENT ABSTRACTS OF JAPAN Bd. 2002, Nr. 02, 2. April 2002 (2002-04-02) & JP 2001 289317 A (HONDA MOTOR CO LTD), 19. Oktober 2001 (2001-10-19)
- PATENT ABSTRACTS OF JAPAN Bd. 2002, Nr. 02, 2. April 2002 (2002-04-02) & JP 2001 295922 A (HONDA MOTOR CO LTD), 26. Oktober 2001 (2001-10-26)

## Beschreibung

Die Erfindung betrifft ein Verfahren zur Steuerung eines Fahrzeuggetriebes mit einer Parksperre zum formschlüssigen Festhalten eines Abtriebs eines Antriebstrangs gemäß der im Oberbegriff des Patentanspruchs 1 näher definierten Art, sowie ein Fahrzeuggetriebe mit einer Parksperre zum formschlüssigen Festhalten eines Abtriebs eines Antriebstrangs gemäß der im Oberbegriff des Patentanspruchs 33 näher definierten Art.

Generell sind Fahrzeuge mit Schaltgetrieben bei abgeschaltetem Motor über eine Feststellbremse und zusätzlich dadurch gegen Wegrollen sicherbar, dass ein Gang mit hoher Übersetzung in dem Getriebe eingelegt wird und ein Antriebstrang im Bereich eines Abtriebs blockiert ist. Bei Fahrzeugen, deren Antriebstrang mit einem hydrodynamischen Drehmomentwandler oder einer hydrodynamischen Kupplung ausgebildet ist, entfällt diese Möglichkeit, da bei abgeschaltetem Motor eine Verbindung zwischen dem Motor mit seiner Bremskraft und dem Abtrieb nicht aufrecht erhalten werden kann. Um dennoch eine Sicherheit gegen Wegrollen auch unter extremen Bedingungen zu gewährleisten, sind Fahrzeuge mit hydrodynamischem Drehmomentwandler bzw. hydrodynamischer Kupplung mit einer separaten Einrichtung zum Feststellen eines Abtriebs ausgerüstet, die üblicherweise als sogenannte Parksperre im Getriebe integriert ist.

Aus der Praxis hinlänglich bekannte Parksperren verhindern ein unbeabsichtigtes Rollen des Fahrzeuges selbst bei abgeschaltetem Motor. Ist eine Parksperre aktiviert bzw. eingelegt, dann ist eine mit Antriebsrädern des Fahrzeuges drehfest verbundene Getriebeabtriebswelle derart blockiert, dass das Fahrzeug in der Ebene sowie an Hängen mit bis zu ca. 30 % Steigung bzw. Gefälle gegen ein selbsttätiges Wegrollen gesichert ist. Die Aktivierung solcher Parksperren erfolgt durch einen Fahrer, indem er einen Wählhebel in eine Parkstellung verstellt.

Eine aus der Praxis bekannte Ausführung einer Parksperre ist mit einem an einer Getriebeabtriebswelle drehfest verbundenen Parksperrenrad ausgeführt, welches an seinem Außendurchmesser eine Art Keilwellenprofil aufweist. Des weiteren ist eine Sperrklinke vorgesehen, welche bei aktivierter Parksperre radial in das Keilwellenprofil des Parksperrenrades formschlüssig eingreift, wodurch die Getriebeabtriebswelle dann blockiert ist.

Beim Auslegen der Parksperre wird die Sperrklinke über einen mechanisch, hydraulisch oder elektrisch wirkenden Mechanismus aus dem Eingriff mit dem Parksperrenrad geführt, sodass das Parksperrenrad bzw. die Getriebeabtriebswelle entriegelt ist und der Antriebsstrang abtriebsseitig nicht mehr verblockt ist. Das Auslegen der Parksperre erfolgt ebenfalls in Abhängigkeit einer entsprechenden Fahrerwunschvorgabe, wobei der Fahrer hierzu den Wählhebel aus der Parkstellung in eine beliebige andere Wählhebelposition positionieren muss.

Bei eingelegter Parksperre wird ein über die Antriebsräder abtriebsseitig an dem Getriebe anliegendes Drehmoment von der Sperrklinke abgestützt. Das Drehmoment wird beispielsweise dadurch erzeugt, dass ein Fahrzeug in Vorwärtsfahrtrichtung bergauf oder bergab steht und die dabei an dem Fahrzeug angreifende Hangabtriebskraft abtriebsseitig in den Antriebstrang eingeleitet wird. Durch das Blockieren der Getriebeabtriebswelle über die Parksperre wird der Antriebstrang zwischen den Antriebsrädern und der Parksperre vorgespannt. Beim Auslegen der Parksperre wird die Vorspannung des Antriebstranges schlagartig in Form eines mehr oder minder starken Entlastungsstoßes abgebaut, der über Aufhängungspunkte des Antriebstranges auf eine Karosserie des Fahrzeuges übertragen wird und insbesondere bei starken Gefällen besonders ausgeprägt ist, was für einen Fahrer nachteilhafterweise einerseits als ein unangenehmer Stoß und andererseits auch als ein unangenehmes akustisches Geräusch wahrnehmbar ist, zudem auch die betroffenen Bauteile des Getriebes zusätzlich mechanisch belastet.

Aus der DE 102 55 714 A1 der Anmelderin ist ein Verfahren zur Steuerung eines Automatgetriebe mit mehreren Schaltelementen und mit einer Parksperre zum formschlüssigen Festsetzen eines Abtriebs eines Antriebsstranges bekannt, bei dem zeitlich parallel zum Einlegen der formschlüssigen Parksperre zusätzlich der Abtrieb über wenigstens ein zugeschaltetes reibschlüssiges Schaltelement des Automatgetriebes arretiert wird. Dadurch wird ein Entlastungsstoß beim Lösen der Formschlusses der Parksperre vermindert, weil ein eventuell zwischen Abtriebsrädern und der Einrichtung zum Feststellen des Abtriebs vorgespannter Abtrieb eines Kraftfahrzeugs bei ausgelegter Einrichtung zum Feststellen des Abtriebes nach wie vor von dem zugeschalteten reibschlüssigen Schaltelement gehalten wird. Die Vorspannung des Abtriebs ist vorzugsweise durch ein anschließendes gesteuertes Abschalten des zugeschalteten reibschlüssigen Schaltelementes ohne merklichen Entlastungsstoß abbaubar, wobei der Abtrieb nach dem Abschalten dieses Schaltelementes entsprechend einer Fahrerwunschvorgabe wieder drehbar ist. Wenn zum reibschlüssigen Arretieren des Abtriebs ein bereits im Automatgetriebe vorhandenes Schaltelement vorgesehen ist, das auch für Gangwechsel benötigt wird und deshalb als Lamellenkupplung bzw. Lamellenbremse üblicher Bauart ausgebildet ist, so muss bei eingelegter Parksperre stets die Druckmittelversorgung dieses Schaltelement sichergestellt sein, was zu Problemen bei abgeschaltetem Antriebsmotor des Fahrzeugs führt. Alternativ wäre das zum Festsetzen des Abtriebs vorgesehene reibschlüssige Schaltelement vergleichsweise aufwändig derart umzukonstruieren, dass es drucklos schließt und bei einer Beaufschlagung mit Druckmittel öffnet. Entsprechend ist das Verfahren der DE 102 55 714 A1 auch nicht problemlos in verschiedenen Getriebetypen in gleicher Weise anwendbar.

Der vorliegenden Erfindung liegt die Aufgabe zugrunde, ein Fahrzeuggetriebe mit mehreren reibschlüssigen Schaltelementen und mit einer Parksperre zum formschlüssigen Festsetzen eines Abtriebs eines Antriebstrangs des Fahrzeugs und ein universell einsetzbares Verfahren zur Steuerung eines derartigen Fahrzeuggetriebes zur Verfügung zu stellen, mit dem ein störender Entlastungsstoß beim Lösen bzw. Auslegen der zuvor eingelegten Parksperre vermieden bzw. derart vermindert wird, dass er von einem Fahrer des Fahrzeugs nicht mehr als störend wahrnehmbar ist.

Erfindungsgemäß ist diese Aufgabe durch ein Verfahren mit den Merkmalen des Patentanspruchs 1 und mit einem Fahrzeuggetriebe gemäß den Merkmalen des Patentanspruchs 33 gelöst.

Demnach werden bei dem Verfahren gemäß der Erfindung dann, wenn eine Fahrerwunschvorgabe zum Deaktivieren der zuvor formschlüssig arretierten Parksperre erkannt ist, während eine aktuelle Fahrbahnneigung größer als ein vordefinierter (erster) positiver Schwellwert oder kleiner als ein vordefinierter (erster) negativer Schwellwert ist, in vorteilhafter Weise zunächst - bei immer noch formschlüssig arretierter Parksperre - in Abhängigkeit vom Vorzeichen der aktuellen Fahrbahnneigung Schaltelemente des Getriebes in derartiger Kombination derart in Schlupf gebracht, dass sich der Abtrieb entgegen seiner bei aktivierter Parksperre wirkenden Verspannungsrichtung verdreht, bis eine Verspannung am formschlüssig eingelegten Sperrelement der Parksperre aufgehoben oder zumindest soweit vermindert ist, dass bei einem späteren mechanischen Lösen bzw. Auslegen der Parksperre kein für den Fahrer störender Entlastungsstoß mehr auftritt.

Anschließend besteht mit dem Verfahren gemäß der Erfindung in vorteilhafter Weise die Möglichkeit, den Abtrieb eines Antriebstranges des Fahrzeugs beim Lösen bzw. Auslegen einer zuvor aktivierten bzw. eingelegten Parksperre zum Feststellen des Abtriebs temporär über wenigstens ein zugeschaltetes reibschlüssiges Schaltelement des Fahrzeuggetriebes zu arretieren. Dieser Verfahrensschritt des erfindungsgemäßen Verfahrens ist insbesondere dann wichtig, wenn die zum Abbau der Verspannung am formschlüssig eingelegten Sperrelement der Parksperre zuvor in Schlupf gebrachten Schaltelemente eine Drehrichtung des Abtriebs des Fahrzeug zufolge hat, die nicht der Drehrichtung des Abtriebs bzw. der Fahrtrichtung gemäß der Fahrerwunschvorgabe entspricht. Während des mechanischen Lösens bzw. Auslegens der Parksperre wird der Abtrieb des Fahrzeugs dann über den Kraftschluss der zugeschalteten reibschlüssigen Schaltelemente im Getriebe gehalten. Ist die Parksperre mechanisch gelöst bzw. ausgelegt, so ist die Vorspannung des Abtriebs durch ein anschließendes gesteuertes oder geregeltes Abschalten eines der zuvor geschlossenen reibschlüssigen Schaltelemente ohne merklichen Entlastungsstoß abbaubar, wobei gegebenenfalls gleichzeitig mit dem Öffnen des zum Festsetzen des Abtriebs zugeschalteten Schaltelementes auf eine Schaltelement-Kombination gewechselt wird, die dem von Fahrer gewünschten Anfahrgang entspricht, sodass der Abtrieb nach dem Abschalten dieses Schaltelementes wieder entsprechend der Fahrerwunschvorgabe drehbar ist.

Dieser Verfahrensschritt, in dem der Abtrieb des Fahrzeug über einen Reibschluß von Schaltelementen des Getriebes am Getriebegehäuse festgesetzt ist, kann also entfallen, wenn das Fahrzeug sich durch die zum Abbau der Verspannung am formschlüssig eingelegten Sperrelement der Parksperre zuvor in Schlupf gebrachten Schaltelemente in die Richtung anfahrbar ist, die dem Fahrerwunsch entspricht.

Die notwendige Kombination der zum Entspannen der formschlüssig eingelegten Sperrelementes der Parksperre temporär zuzuschaltenden Schaltelemente des Getriebes ist einerseits eine Funktion der Verspannungsrichtung des Antriebstrangs des Fahrzeugs, die vorzugsweise über eine Neigungserkennung des Fahrzeugs bzw. des Getriebes ermittelt wird, andererseits auch ein Funktion der Ganglogik des Getriebes und des vom Fahrer über den Wählhebel gewählten Zielgangs bzw. des von der aktuell aktiven Fahrstrategie gewählten Zielgangs. Die aktuelle Fahrbahnneigung kann durch die genannte Neigungserkennung beispielsweise messtechnisch ermittelt werden über einen handelsüblichen Neigungssensor oder aber auch rechnerisch durch Auswertung von geeigneten Fahrstreckendaten eines landkartengestützten Navigationssystems.

Da bei einem Lösen bzw. Auslegen der Parksperre kein störender Entlastungsstoß auftritt, wenn das Fahrzeug in der Ebene oder an einem Hang mit nur geringer Fahrbahnneigung steht, wird das erfindungsgemäße Verfahren zum Lösen bzw. Auslegen der Parksperre zweckmäßigerweise nur dann angewendet, wenn das Fahrzeug bei aktivierter bzw. eingelegter Parksperre in Vorwärtsfahrtrichtung gesehen an einer Steigung mit einer Fahrbahnneigung größer dem vorgegebenen (ersten) positiven Schwellwert steht, und wenn das Fahrzeug bei aktivierter bzw. eingelegter Parksperre in Vorwärtsfahrtrichtung gesehen in einem Gefälle mit einer Fahrbahnneigung kleiner dem vorgegebenen (ersten) negativen Schwellwert steht. Hierdurch werden auch technisch bedingte Toleranzen speziell in und um die Null-Lage der Neigungserkennung des Getriebes bzw. des Fahrzeugs berücksichtigt. Dabei können diese Schwellwerte der aktuellen Fahrbahnneigung beispielsweise als fester Wert vordefiniert sein, in Abhängigkeit der Fahrzeugmasse vordefiniert sein oder auch in Abhängigkeit der aktuellen Fahrzeugmasse adaptiv aktualisiert werden.

In extremen Betriebszuständen des Fahrzeugs - beispielsweise durch ein Stehen an einem extrem steilen Hang oder an einer Bordsteinkante - kann es je nach Getriebekonstruktion vorkommen, dass sich durch die temporäre Zuschaltung von Schaltelementen des Getriebes der Abtrieb des Fahrzeug nicht so weit entspannen lässt, dass der Entlastungsstoß beim Auslegen des zuvor formschlüssig eingelegte Sperrelement der Parksperre vollständig vermieden wird, dass also die Kraft beim Auslegen des zuvor formschlüssig eingelegte Sperrelement der Parksperre immer noch zu groß ist. Derartige extreme Betriebszustände sind beispielsweise über die aktuelle Fahrbahnneigung gegebenenfalls unter Berücksichtigung der Fahrzeugmasse erkennbar bzw. abschätzbar. Entsprechend kann in Weiterbildungen der Erfindung vorgesehen sein, dass beim Vorliegen derartiger extremer Betriebszustände das erfindungsgemäße Verfahren nach dem Erreichen der maximal möglichen Entlastung der Parksperren-Sperrelementes vorzeitig abgebrochen und die Parksperre sofort ausgelegt und sofern erforderlich, gleichzeitig in den der Fahrerwunschvorgabe entsprechenden Gang geschaltet wird, oder dass beim Vorliegen derartiger extremer Betriebszustände das erfindungsgemäße Verfahren gar nicht gestartet wird.

So wird in einer ersten Weiterbildung des erfindungsgemäßen Verfahrens vorgeschlagen, dass das Verfahren vorzeitig abgebrochen und die Parksperre sofort ausgelegt und - sofern erforderlich - gleichzeitig in den der Fahrerwunschvorgabe entsprechenden Gang geschaltet wird, wenn eine Ausrückkraft der Parksperre größer ist als ein vordefinierter Wert. Die genannte Ausrückkraft ist beispielsweise über eine Kraft- oder Druck- oder Drehmomentmessung an dem Betätigungssystem des Sperrelementes der Parksperre bzw. am Sperrelement selber ermittelbar. In einer zweiten Weiterbildung des erfindungsgemäßen Verfahrens wird vorgeschlagen, dass das Verfahren nach dem ersten Verfahrensschritt nach dem Erreichen der maximal möglichen Entlastung der Parksperre vorzeitig abgebrochen und die Parksperre sofort ausgelegt und - sofern erforderlich - gleichzeitig in den der Fahrerwunschvorgabe entsprechenden Gang geschaltet wird, wenn die aktuelle Fahrbahnneigung größer als ein zweiter positiver Schwellwert oder kleiner als ein zweiter negativer Schwellwert ist, wobei dieser zweite positive Schwellwert der aktuellen Fahrbahnneigung größer ist als der zur Aktivierung des ersten Verfahrensschritts erforderliche erste positive Schwellwert der aktuellen Fahrbahnneigung, und wobei der zweite negative Schwellwert der aktuellen Fahrbahnneigung kleiner ist als der der zur Aktivierung des ersten Verfahrensschritts erforderliche erste negative Schwellwert der aktuellen Fahrbahnneigung. Dabei können dieser zweite positive Schwellwert und/oder dieser zweite negative Schwellwert der aktuellen Fahrbahnneigung beispielsweise als fester Wert vordefiniert sein, in Abhängigkeit der Fahrzeugmasse vordefiniert sein oder auch in Abhängigkeit der aktuellen Fahrzeugmasse adaptiv aktualisiert werden. In einer dritten Weiterbildung des erfindungsgemäßen Verfahrens wird vorgeschlagen, dass das Verfahren schon vor dem ersten Verfahrensschritt abgebrochen und die Parksperre sofort ausgelegt wird, wenn die aktuelle Fahrbahnneigung größer als der eben genannte zweite positive Schwellwert oder kleiner als der eben genannte zweite negative Schwellwert ist.

Das Fahrzeuggetriebe gemäß der Erfindung weist mehrere reibschlüssige Schaltelemente zum Betrieb des Fahrzeugs in Vorwärtsfahrtrichtung vorzugsweise in mehreren Gängen sowie in Rückwärtsfahrtrichtung gemäß einer Fahrerwunschvorgabe, eine Parksperre zum formschlüssigen Festsetzen des Abtriebs des Fahrzeugs, eine Steuerung zum Deaktivieren der Parksperre und zum Ansteuern der Schaltelemente, sowie eine Einrichtung zur Erkennung einer Neigung des Fahrzeugs bzw. der Fahrbahn auf. Dabei ist mindestens ein reibschlüssiges Schaltelement des Getriebes zum reibschlüssigen Festsetzen des Abtriebs des Fahrzeugs zuschaltbar. Gemäß der Erfindung steuert die Steuerung des Getriebes das Deaktivieren bzw. Auslegen der Parksperre gemäß dem zuvor beschriebenen erfindungsgemäßen Verfahren bei Vorliegen einer entsprechenden Fahrerwunschvorgabe.

Bei Vorliegen einer Fahrerwunschvorgabe zum Deaktivieren bzw. Auslegen der Parksperre wird also zunächst ein Antriebstrang des Fahrzeugs entgegen seiner bei aktivierter bzw. eingelegter Parksperre wirkenden Verspannungsrichtung verdreht durch Schließen von reibschlüssigen Schaltelementen des Getriebes in einer von der Neigung des Fahrzeugs abhängigen Kombination, anschließend ist der Abtrieb des Fahrzeugs durch Schließen des zum Festsetzen des Abtriebs vorgesehenen reibschlüssiges Schaltelements des Getriebes am Getriebegehäuse festsetzbar, anschließend wird der Formschluss der Parksperre gelöst und anschließend das zum Festsetzen des Abtriebs zugeschaltete reibschlüssige Schaltelement des Getriebes wieder geöffnet, sodass der Abtrieb des Fahrzeugs entsprechend der Fahrerwunschvorgabe drehbar ist. Falls die bei aktivierter Parksperre wirkende Verspannungsrichtung des Abtriebs unterschiedlich ist von einer der Fahrerwunschvorgabe entsprechenden Drehrichtung des Abtriebs, so ist ein zum Anfahren des Fahrzeugs entsprechend der Fahrerwunschvorgabe benötigtes, aber noch nicht angesteuertes Schaltelement spätestens mit dem Beginn des Abschaltens des zum Festsetzen des Abtriebs zugeschaltete reibschlüssige Schaltelement zuzuschalten, sodass gleichzeitig mit dem Öffnen des zum Festsetzen des Abtriebs zugeschalteten Schaltelementes eine dem von Fahrer gewünschten Anfahrgang entsprechende Schaltelement-Kombination vorliegt.

Mit dem erfindungsgemäßen Verfahren wird ein durch eine hangabtriebskraftbedingte Vorspannung des Abtriebs entstandenes Drehmoment beim Deaktivieren bzw. Auslegen der zuvor aktivierten bzw. eingelegten formschlüssigen Parksperre effektiv abgebaut, wodurch ein Entlastungsstoß beim Lösen des Formschusses der Parksperre zumindest in den meisten Betriebszuständen des Fahrzeugs vermieden wird. Wird während des mechanischen Lösens des Formschusses der Parksperre der Abtrieb des Fahrzeugs zusätzlich über den Reibschluss des zum Festsetzen des Abtriebs zugeschalteten Schaltelementes des Getriebes am Getriebegehäuse abgestützt, so besteht anschließend die Möglichkeit, den vorgespannten Teil des Abtriebs durch ein gesteuertes bzw. geregeltes Öffnen dieses Schaltelementes über der Zeit gedämpft abzubauen und gegebenenfalls gleichzeitig bzw. kurz vorher eine Schaltelement-Kombination anzuwählen, durch die ein komfortables Anfahren des Fahrzeugs in der vom Fahrer gewünschten Fahrtrichtung möglich ist.

Dabei ist es erfindungsunwesentlich, ob die Parksperre als Getriebebauelement innerhalb eines Gehäuses des Fahrzeuggetriebes angeordnet ist oder als separates, auf den Abtrieb des Antriebstrangs des Fahrzeugs wirkendes Bauelement des Antriebstrangs ausgeführt ist. Als mögliche Bauarten des Fahrzeuggetriebes seien beispielhaft Automatgetriebe und automatisierte Schaltgetriebe genannt.

Besonders vorteilhaft ist die Kombination des erfindungsgemäßen Verfahrens mit einer sogenannten "E-Schaltung", bei der die Wirkverbindung zwischen dem fahrerbedienbaren Wählhebel und dem Getriebe als elektrische Verbindung ausgeführt ist. Ist zwischen dem fahrerbedienbaren Wählhebel und dem Getriebe eine mechanische Verbindung beispielsweise mittels Bowdenzug vorgesehen, so ist es sinnvoll, im Bereich der Parksperre eine mechanische, elektromagnetische oder elektrohydraulische Zusatzeinrichtung vorzusehen, die verhindert, dass der Formschluss der Parksperre sofort mechanisch gelöst bzw. das Sperrelement der Parksperre (üblicherweise eine Sperrklinke) sofort mechanisch ausgelegt wird, wenn der Wählhebel zum Auslegen der Parksperre betätigt wird. Eine derartige, getriebeseitig installierte Zusatzeinrichtung kann beispielsweise ein in Kraftflussrichtung gesehen zwischen Bowdenzug und Parksperren-Sperrelement angeordnetes mechanisches Schleppgestänge, ein direkt auf das Sperrelement wirkender Elektromagnet oder ein direkt auf das Sperrelement wirkender elektrohydraulisch betätigbarer Hydraulikkolben sein. Eine wählhebelseitig installierte Zusatzeinrichtung kann beispielsweise ein direkt auf den Wählhebel wirkender Sperr-Elekromagent sein, der nach dem Antippen des Wählhebels in Richtung der der Position "P" folgenden Wählhebelposition heraus die Verschiebung des Wählhebels solange blockiert, bis das Sperrelement der Parksperre entlastet ist durch das erfindungsgemäße temporäre Zuschalten reibschlüssiger Schaltelemente des Getriebes.

In einer vorteilhaften Ausgestaltung der Erfindung wird vorgeschlagen, dass bei der Ansteuerung der Schaltelemente im Rahmen des erfindungsgemäßen Verfahrens neben der Fahrbahnneigung wahlweise auch eine Fahrzeugmasse und wahlweise auch eine Getriebetemperatur berücksichtigt werden. Dabei kann die Fahrzeugmasse als ein fest voreingestellter Wert vorgegeben sein, beispielsweise aber auch als ein adaptiven aktualisierter Wert, der über einen ständigen Vergleich zwischen einer theoretischen Fahrleistung mit einer aktuellen Fahrleistung aktualisiert wird. Sofern fahrzeugseitig die Voraussetzungen dafür gegeben sind, kann die Fahrzeugmasse im Rahmen des erfindungsgemäßen Verfahrens auch als ein aktueller Wert bestimmt sein unter Verwendung von Daten eines Fahrwerks des Fahrzeugs, wie beispielsweise ein Signal einer Niveauregulierung einer Fahrzeugachse, wie beispielsweise radindividuelle Druckwerte von Luftfedern einer Luftfederung, oder wie beispielsweise der achsindividuelle oder radindividuelle Einfederweg in Verbindung mit der Federsteifigkeit von Stahlfedern. Ist mit dem Fahrzeug auch ein Anhängerbetrieb möglich, so wird vorgeschlagen, auch die Anhängermasse - insbesondere in Form eines vordefinierten Wertes, der in etwa die Hälfte einer zulässigen Gesamtmasse des Anhängers entspricht - bei der Ansteuerung der Schaltelemente im Rahmen des erfindungsgemäßen Verfahrens zu berücksichtigen, wobei ein Anhängerbetrieb des Fahrzeugs beispielsweise über die elektrische Verbindung zwischen Zugfahrzeug und Anhänger erkannt wird, insbesondere mittels eines Schalters an der fahrzeugseitigen elektrischen Anhängerbuchse oder mittels Überwachung des elektrischen Widerstands zwischen Pins der fahrzeugseitigen elektrischen Anhängerbuchse.

Weitere Vorteile und vorteilhafte Ausgestaltungen des Gegenstandes nach der Erfindung ergeben sich aus den Patentansprüchen und den unter Bezugnahme auf die Zeichnungen prinzipmäßig beschriebenen Ausführungsbeispielen.

Im Folgenden wird die Erfindung nun anhand mehrerer Ausführungsbeispiele näher erläutert. Es zeigen:
- Fig. 1: einen schematisierten Antriebstrang eines Fahrzeugs mit einem Anfahrelement, einem beispielhaften Getriebe und einem dem Getriebe nachgeschalteten Abtrieb;
- Fig. 1A: eine Schaltlogik des Automatgetriebes gemäß Fig. 1;
- Fig. 2: ein erstes Zustandsdiagramm des erfindungsgemäßen Verfahrens bei einer Wählhebelschaltung "P → D1" an einer Fahrbahn-Steigung;
- Fig. 2A: einen zeitlichen Verlauf der Wählhebelschaltung gemäß Fig. 2;
- Fig. 3: ein zweites Zustandsdiagramm des erfindungsgemäßen Verfahrens bei einer Wählhebelschaltung P → D2 an einer Fahrbahn-Steigung;
- Fig. 4: ein Zustandsdiagramm des erfindungsgemäßen Verfahrens bei einer Wählhebelschaltung P → N an einer Fahrbahn-Steigung;
- Fig. 4A: einen zeitlichen Verlauf der Wählhebelschaltung gemäß Fig. 4;
- Fig. 5: ein Zustandsdiagramm des erfindungsgemäßen Verfahrens bei einer Wählhebelschaltung P → R an einer Fahrbahn-Steigung;
- Fig. 5A: einen zeitlichen Verlauf der Wählhebelschaltung gemäß Fig. 5;
- Fig. 6: ein erstes Zustandsdiagramm des erfindungsgemäßen Verfahrens bei einer Wählhebelschaltung P → D1 in einem Fahrbahn-Gefälle;
- Fig. 6A: einen zeitlichen Verlauf der Wählhebelschaltung gemäß Fig. 6;
- Fig. 7: ein zweites Zustandsdiagramm des erfindungsgemäßen Verfahrens bei einer Wählhebelschaltung P → D2 in einem Fahrbahn-Gefälle;
- Fig. 8: ein Zustandsdiagramm des erfindungsgemäßen Verfahrens bei einer Wählhebelschaltung P → N in einem Fahrbahn-Gefälle;
- Fig. 8A: einen zeitlichen Verlauf der Wählhebelschaltung gemäß Fig. 8;
- Fig. 9: ein Zustandsdiagramm des erfindungsgemäßen Verfahrens bei einer Wählhebelschaltung P → R in einem Fahrbahn-Gefälle; und
- Fig. 9A: einen zeitlichen Verlauf der Wählhebelschaltung gemäß Fig. 9.

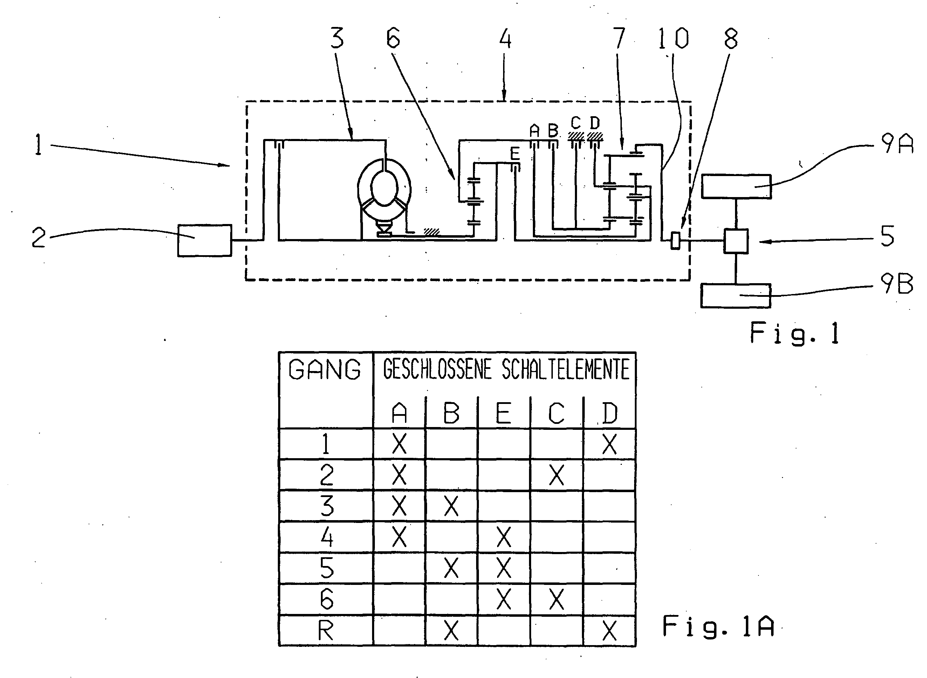

Fig. 1 zeigt schematisiert einen Antriebsstrang 1 eines Kraftfahrzeuges, welcher als wesentliche Baugruppen bzw. Bauteile eine als Brennkraftmaschine ausgeführte Antriebsmaschine 2, ein als hydrodynamischer Drehmomentwandler ausgebildetes Anfahrelement 3, ein Getriebe 4 und einen Abtrieb 5 umfasst. Das Getriebe 4 ist vorliegend beispielhaft als ein automatisches Lastschaltgetriebe ausgeführt, welches getriebeeingangsseitig einen einfachen ersten Planetensatz 6 und getriebeausgangsseitig einen zweiten Planetensatz 7 aufweist, der als ein sogenannter Ravigneaux-Planetenradsatz ausgeführt ist. Zur Darstellung verschiedener Übersetzungen bzw. Gangstufen des Getriebes 4 sind zwischen den beiden Planetensätzen 6 und 7 fünf Schaltelemente A bis E angeordnet, die in an sich bekannter Art und Weise als Lamellenkupplungen und Lamellenbremsen ausgebildet sind. In Abhängigkeit der Ansteuerung der Schaltelemente A bis E ist ein Antriebsmoment der Antriebsmaschine 2 mit jeweils unterschiedlichen Übersetzungen des Getriebes 4 auf den Abtrieb 5 führbar. Aus dem Getriebeschema ergibt sich, dass eine Abtriebswelle 10 des Getriebes 4 reibschlüssig am Getriebegehäuse festgesetzt ist, wenn die Schaltelemente C und D oder die Schaltelemente A, B und D gleichzeitig geschlossen sind. Selbstverständlich ist die in Fig. 1 dargestellte Ausführung sämtlicher Komponenten des Antriebsstrangs 1 ebenso als beispielhaft anzusehen wie das Getriebekonzept bzw. der Getriebetyp.

Der Antriebsstrang 1 wird über wenigstens eine nicht näher dargestellte Steuereinrichtung angesteuert, welche mit einem ebenfalls nicht näher dargestellten Wählhebel verbunden ist. Über den Wählhebel besteht für einen Fahrer des Kraftfahrzeuges in an sich bekannter Art und Weise die Möglichkeit, verschiedene Fahrerwunschvorgaben zu generieren. Dabei sind über den Wählhebel verschiedene Fahrerwunschvorgaben, wie beispielsweise Vorwärtsoder Rückwärtsfahrt, eine Neutralstellung oder eine Parkstellung, vorgebbar.

Ist die Wählhebelposition für Vorwärtsfahrt eingelegt, sind in dem vorliegenden Getriebe sechs verschiedene Vorwärtsgänge bzw. Übersetzungen über selektives Schalten der Schaltelemente A, B, E, C und D durch die Steuereinrichtung einstellbar, die üblicherweise in Abhängigkeit verschiedener in der Steuereinrichtung abgelegter Fahrprogramme betriebspunktabhängig automatisch eingestellt werden. Ist dagegen die Neutralstellung des Wählhebels ausgewählt, ist der Leistungsfluss zwischen der Antriebsmaschine 2 und dem Abtrieb 5 im Bereich des Getriebes unterbrochen. Ist die Wählhebelposition für Rückwärtsfahrt eingelegt, ist in dem vorliegenden Getriebe ein Rückwärtsgang über die Steuereinrichtung einstellbar. Eine beispielhafte Schaltlogik dieses Automatgetriebes 4 ist in Fig. 1A dargestellt.

Zurückkommend auf Fig. 1, wird im Folgenden eine Parksperre 8 des Automatgetriebes 4 zum Feststellen des Abtriebs 5 beschrieben. Verstellt der Fahrer den Wählhebel in die Parkstellung "P", wird die Parksperre 8 aktiviert und der Abtrieb 5 wird über einen Formschluss blockiert. In diesem Zustand kann das Kraftfahrzeug weder eine Vorwärtsbewegung noch eine Rückwärtsbewegung ausführen, da Antriebsräder 9A, 9B von der Einrichtung 8 zum Feststellen des Abtriebs 5 formschlüssig drehfest gehalten sind.

Die Parksperre 8 umfasst beispielsweise ein drehfest mit der Abtriebswelle 10 des Getriebes verbundenes Parksperrenrad und eine Sperrklinke, wobei die genannte Sperrklinke bei aktivierter Parksperre 8 in ein am Umfang des genannten Parksperrenrades vorgesehenes Keilwellenprofil formschlüssig eingreift und so den Abtrieb 5 des Antriebsstrangs 1 drehfest festhält bzw. arretiert. Die Parksperre 8 des Automatgetriebes 4 ist also in an sich bekannter Art und Weise ausgebildet und deshalb in Fig. 1 auch nicht näher dargestellt.

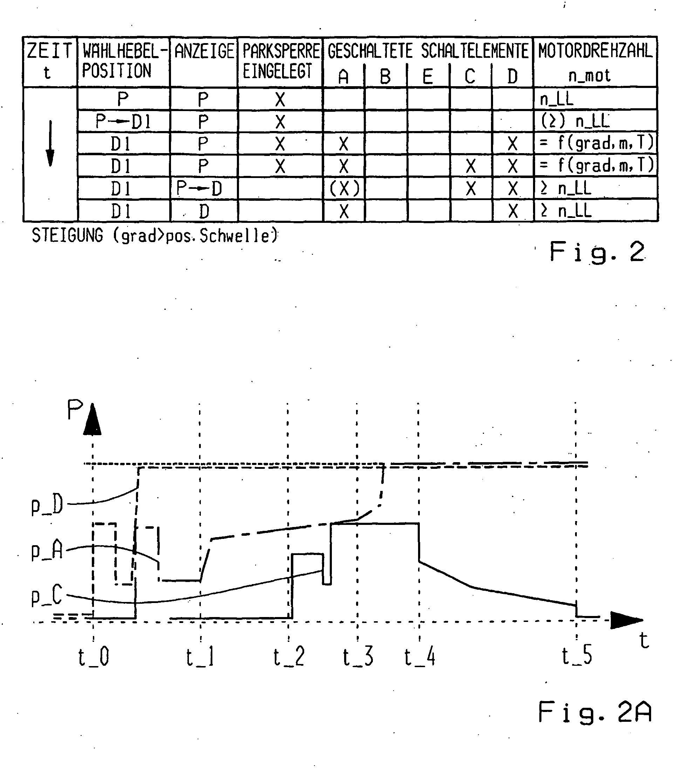

Anhand der Figuren 2 bis 9 werden im folgenden das erfindungsgemäße Verfahren und das mit diesem Verfahren steuerbare erfindungsgemäße Fahrzeug-Getriebe näher erläutert, wobei in allen Figuren für vergleichbare Sachverhalte auch die gleichen Bezugszeichen verwendet werden.

Fig. 2 zeigt nun ein erstes beispielhaftes Zustandsdiagramm des erfindungsgemäßen Verfahrens für eine über den Wählhebel vorgegebene Fahrerwunschvorgabe "P → D1", wobei das Fahrzeug zum Zeitpunkt dieser Wählhebelbetätigung durch den Fahrer in Vorwärtsfahrtrichtung gesehen an einer Fahrbahn-Steigung mit aktivierter bzw. eingelegter Parksperre (8) steht. Die Wählhebelstellung "P" bezeichnet die Parkstellung des Getriebes (4) bzw. des Fahrzeugs, die Wählhebelstellung "D1" einen Vorwärtsfahrbereich mit automatischer Gangwahl und Anfahrübersetzung "1. Gang". Dabei entspricht dieses Zustandsdiagramm einem zeitlichen Ablauf der einzelnen erfindungsgemäßen Verfahrensschritte beim Auslegen der Parksperre (8), was durch einen eine Zeit t charakterisierenden Pfeil verdeutlicht wird. Weiterhin eingetragen in dem Zustandsdiagramm sind eine Wählhebelposition, eine optional im Fahrzeug vorgesehene Anzeige zur Information des Fahrers über den tatsächlichen Zustand der Wählhebelstellung bzw. den tatsächlichen Zustand der Umsetzung seiner Wählhebelpositionsvorgabe im Getriebe, eine Zustandsinformation, ob die Parksperre (8) aktuell mechanisch eingelegt ist oder nicht, eine Zustandsinformation, welche Schaltelemente (A bis E) aktuell geschaltet sind, sowie eine Information über die aktuelle Drehzahl n_mot der mit dem Getriebe (4) verbundenen Antriebsmaschine (2) des Fahrzeugs.

Wie in Fig. 2 ersichtlich, beschreibt die erste Zeile des Zustandsdiagramms den Ausgangszustand vor der Betätigung des Wählhebel durch den Fahrer: Die Wählhebelposition ist die Parkposition "P", die Parksperre (8) ist mechanisch eingelegt und dadurch der Abtrieb (5) des Fahrzeugs formschlüssig blockiert, alle Schaltelemente A bis E des Getriebes (4) sind geöffnet, die Drehzahl n_mot der Antriebsmaschine (2) entspricht einer Leerlaufrehzahl n_LL, wobei das Fahrzeug hier in Vorwärtsfahrtrichtung gesehen an einer Steigung steht, deren Fahrbahnneigung grad größer ist als ein vordefinierter positiver Schwellwert. Die Wähthebelpositionsanzeige zeigt, sofern vorhanden, "P" an und informiert so den Fahrer, dass sich das Fahrzeug in Parkposition befindet bzw. dass die Parksperre (8) eingelegt ist. Die aktuelle Fahrbahnneigung grad wird dabei durch eine Neigungserkennung des Getriebes (4) oder des Fahrzeugs ermittelt, beispielsweise messtechnisch über einen handelsüblichen Neigungssensor oder rechnerisch durch Auswertung von geeigneten Fahrstreckendaten eines landkartengestützten Navigationssystems.

Die zweite Zeile des Zustandsdiagramms beschreibt den Zustand, in dem festgestellt wird, ob der Fahrer die Parkposition "P" verlassen und in welchen Fahrbereich er anschließend wechseln möchte, und ob das Fahrzeug in Vorwärtsfahrtrichtung gesehen an einer Steigung oder in einem Gefälle steht. Im vorliegenden Beispiel betätigt der Fahrer den Wählhebel von der Position "P" nach "D1", wobei diese Wählhebelposition "D1" hier beispielhaft den Vorwärtsfahrbereich des Getriebes (4) charakterisiert, in dem die Getriebesteuerung die Gangwahl automatisch vorgibt mit dem ersten Gang des Getriebes (4) als Anfahrgang bzw. Anfahrübersetzung. Entsprechend der Schaltlogik gemäß Fig. 1A für das beispielhafte Automatgetriebe (4) gemäß Fig. 1 müssen zur Realisierung des ersten Vorwärtsgangs im Getriebe (4) die beiden reibschlüssigen Schaltelemente A und D geschlossen werden. Während der Wählhebelbetätigung "P → D1" durch den Fahrer ist die Parksperre (8) immer noch mechanisch eingelegt, alle Schaltelemente A bis E des Getriebes (4) sind immer noch geöffnet, die Antriebsmaschine (2) dreht in der Regel immer noch mit Leerlaufdrehzahl n_LL, kann aber auch schon seitens einer Motorsteuerung mit leicht angehobener Drehzahl n_mot rotieren. Mit der Erkennung des Fahrerwunsches zum Lösen bzw. Auslegen der Parksperre (8) startet die erfindungsgemäße Funktion, da in dem dargestellten Beispiel die Neigungserkennung des Getriebes (4) bzw. des Fahrzeugs eine ausreichend große positive Fahrbahnneigung grad - also ein Stehen des Fahrzeugs in Vorwärtsfahrtrichtung gesehen an einer hinreichend steilen Steigung - erkannt hat. Die Wählhebelpositionsanzeige zeigt, sofern vorhanden, weiterhin "P" an.

Die dritte Zeile des Zustandsdiagramms beschreibt den nachfolgenden Verfahrensschritt der erfindungsgemäßen Funktion, in dem die Verspannung des Antriebstrangs (1) des Fahrzeugs zumindest soweit reduziert wird, dass ein nachfolgendes Lösen des Formschlusses der Parksperre (8) keinen störenden Entlastungsstoß mehr verursacht. Die Verspannungsrichtung des Antriebstrangs (1) des Fahrzeugs bei formschlüssig eingelegter Parksperre (8) ist unabhängig davon, ob die aus der Parkstellung heraus angewählte zukünftige Fahrrichtung vorwärts oder rückwärts ist, sondern nur abhängig von der Richtung der Fahrbahnneigung. Entsprechend ist das Verspannungsmoment des Antriebstrangs (1) primär eine Funktion der tatsächlichen Hangabtriebskraft des Fahrzeugs, also primär eine Funktion einer aktuellen Fahrzeugmasse m und der Fahrbahnneigung grad. Infolge des Ausgangszustands "Parksperre eingelegt plus Fahrzeug steht an einer Steigung" wirkt die Verspannung des Antriebstrangs (1) des Fahrzeugs im vorliegenden Fall in Rückwärtsfahrtrichtung. Deshalb wird gemäß der Erfindung in dem Verfahrensschritt der dritten Zeile des Zustandsdiagramms - bei unverändert eingelegter Parksperre (8) und unveränderter Anzeige "P" der Wählhebelpositionsanzeige - eine Schaltelement-Kombination angesteuert, die dem ersten Vorwärtsgang des Getriebes (4) entspricht. Dabei werden die beiden reibschlüssigen Schaltelemente A und D zur Drehmomentübertragung derart in Schlupf gebracht, dass die über die Abtriebswelle (10) des Getriebes (4) auf das Sperrelement bzw. die Parksperrenklinke der Parksperre (8) wirkende (Hangabtriebs-)Kraft aufgehoben oder zumindest stark verringert oder sogar leicht überkompensiert wird.

Damit in diesem Betriebszustand im Getriebe (4) einerseits eine ausreichende Druckmittelversorgung gewährleistet ist und andererseits ein zur Abstützung der Hangabtriebskraft des Fahrzeugs ausreichend hohes Getriebeeingangsdrehmoment zur Verfügung steht, kann in einer Ausgestaltung der Erfindung vorgesehen sein, dass die im Leerlauf üblicherweise sehr niedrige Drehzahl n_mot der Antriebsmaschine (2) und bei Bedarf auch ein Drehmoment der Antriebsmaschine (2) in dem Verfahrensschritt der dritte Zeile des Zustandsdiagramms angehoben werden, wobei eine derartige Drehzahl- und Drehmomentanhebung beispielsweise als Funktion der aktuellen Fahrbahnneigung grad und/oder der Fahrzeugmasse m und/oder einer Getriebetemperatur T und/oder von Parametern des Anfahrelementes (3) bzw. Drehmomentwandlers des Getriebes (4) vorgegeben bzw. gesteuert sein kann. Selbstverständlich kann anstelle der Getriebetemperatur T auch eine die Getriebetemperatur repräsentierende Ersatztemperatur des Motors oder des Kühlwassers des Fahrzeugs verwendet werden. Die Fahrzeugmasse m kann beispielsweise als ein fest voreingestellter Wert vorgegeben sein, beispielsweise aber auch als ein adaptiv aktualisierter Wert, der über einen ständigen Vergleich zwischen einer theoretischen Fahrleistung mit einer aktuellen Fahrleistung aktualisiert wird. Weitere Möglichkeiten, die aktuelle Fahrzeugmasse m zu bestimmen, ergeben sich durch die Verwendung von Daten eines Fahrwerks des Fahrzeugs, wie beispielsweise ein Signal einer Niveauregulierung einer Fahrzeugachse, wie beispielsweise radindividuelle Druckwerte von Luftfedern einer Luftfederung, oder wie beispielsweise der achsindividuelle oder radindividuelle Einfederweg in Verbindung mit der Federsteifigkeit von Stahlfedern. Eine eventuell zusätzliche Anhänger-Masse, die bekanntlich die Hangabtriebskraft des Fahrzeugs ebenfalls beeinflusst, kann beispielsweise auf die Masse des Zugfahrzeugs automatisch aufaddiert werden, wenn ein Anhängerbetrieb des Fahrzeugs erkannt ist. Ein Anhängerbetrieb des Fahrzeugs kann vergleichsweise einfach über die elektrische Verbindung zwischen Zugfahrzeug und Anhänger erkannt werden, beispielsweise mittels eines Schalters an der fahrzeugseitigen elektrischen Anhängerbuchse oder einer Überwachung des elektrischen Widerstands zwischen Pins der fahrzeugseitigen elektrischen Anhängerbuchse. Die zu berücksichtigende Anhänger-Masse kann auch näherungweise durch einen festen Wert abgebildet werden, der in etwa dem halben zulässigen Gesamtgewicht des Anhängers entspricht.

Die vierte Zeile des Zustandsdiagramms beschreibt den nachfolgenden Verfahrensschritt der erfindungsgemäßen Funktion, in dem der Abtrieb (5) des Fahrzeugs bei entlasteter bzw. teilentlasteter Parksperre (8) durch Betätigung eines weiteren reibschlüssigen Schaltelementes am Gehäuse des Getriebes (4) festgesetzt wird. Hierzu wird - bei unverändert eingelegter Parksperre (8) und unveränderter Anzeige "P" der Wählhebelpositionsanzeige - zusätzlich zu den im vorigen Verfahrensschritt zugeschalteten Schaltelementen A und D das Schaltelement C zugeschaltet. Dabei ist das jeweilige Druckniveau der drei Schaltelemente A, D und C so bemessen, dass das Getriebe (4) in sich verblockt ist bzw. dass das durch die Hangabtriebskraft des Fahrzeugs auf die Abtriebswelle (10) der Getriebes (4) wirkende Drehmoment am Getriebegehäuse abgestützt wird. Hierbei kann ähnlich wie im vorigen Verfahrensschritt eine Anhebung der Drehzahl n_mot der Antriebsmaschine (2) auf ein Niveau größer der Leerlaufdrehzahl n_LL und eine Anhebung des Drehmomentes der Antriebsmaschine (2) vorgesehen sein, um die Druckmittelversorgung des Getriebes (4) und das zur Abstützung der Hangabtriebskraft erforderliche Getriebeeingangsmoment zur gewährleisten, wobei eine derartige Drehzahl- bzw. Drehmomentanhebung nach einem ähnlichen Algorithmus als Funktion der aktuellen Fahrbahnneigung grad und/oder der Fahrzeugmasse m und/oder einer Getriebetemperatur T und/oder von Parametern des Anfahrelementes (3) bzw. Drehmomentwandlers des Getriebes (4) erfolgen kann wie im vorigen Verfahrensschritt beschrieben.

Abweichend von der Darstellung in Fig. 2 kann in einer anderen Ausgestaltung des erfindungsgemäßen Verfahrens der in Zeile vier dargstellte Verfahrensschritt, in dem der Abtrieb des Fahrzeug über einen Reibschluß von Schaltelementen des Getriebes am Getriebegehäuse festgesetzt ist, auch komplett entfallen, weil die bereits zuvor zum Abbau der Verspannung am formschlüssig eingelegten Sperrelement der Parksperre (8) zugeschalteten Schaltelemente A und D im vorliegenden Fall ermöglichen, dass das Fahrzeug in dem vom Fahrer vorgegebenen Gang "D1" anfahrbar ist.

Die fünfte Zeile des Zustandsdiagramms gemäß Fig. 2 beschreibt den nachfolgenden Verfahrensschritt der erfindungsgemäßen Funktion, in dem der Formschluss der Parksperre (8) gelöst wird, die Parksperre (8) also mechanisch ausgelegt wird. Entsprechend ändert sich die den Einlegestatus der Parksperre (8) betreffende Zustandsinformation und die - soweit vorhanden - Anzeige zur Wählhebelposition, wohingegen die drei Schaltelemente A, D und C geschaltet bleiben. Bei der Zustandsinformation des Schaltelementes A ist mit der Klammer angedeutet, dass dieses Schaltelement A zum reibschlüssigen Festsetzen des Abtriebs (5) nicht benötigt wird und deshalb nicht notwendigerweise geschlossen sein muss. Eine eventuell zuvor aktivierte Drehzahlanhebung für die Antriebsmaschine (2) wird in diesem Verfahrenschritt zurückgesetzt, so dass die Antriebsmaschine (2) nunmehr wieder mit Leerlaufdrehzahl n_LL oder mit einer - durch eine Leerlaufregelung der Motorsteuerung der Motorlast angepassten - leicht erhöhten Drehzahl n_mot rotiert.

Die sechste Zeile des Zustandsdiagramms beschreibt den nachfolgenden letzten Verfahrensschritt der erfindungsgemäßen Funktion, in dem das Schaltelement C, mittels dessen die Abtriebswelle (10) des Getriebes (4) zuvor im entlasteten bzw. teilentlasteten Zustand der formschlüssig eingelegten Parksperre (8) blockiert wurde, nunmehr gesteuert oder geregelt geöffnet wird, so dass ein Anfahren des Fahrzeugs in der vom Fahrer gewünschten Vorwärtsfahrtrichtung möglich ist. Entsprechend ändert sich die den Schaltstatus des Schaltelementes C betreffende Zustandsinformation. Die weiterhin geschalteten Schaltelemente A und D erzeugen im Getriebe (4) einsprechend der in Fig. 1 dargestellten Schaltlogik dabei den ersten Vorwärtsgang. Die Wählhebelpositionsanzeige informiert den Fahrer durch Anzeigen des von ihm zu Beginn der Funktion angewählten Fahrbereichs "D1", das ein Anfahren des Fahrzeugs entsprechend seinem Fahrerwunsch nunmehr möglich ist.

Zur weiteren Verdeutlichung des zeitlichen Ablaufs des erfindungsgemäßen Verfahrens ist in Fig. 2A der zeitlicher Verlauf der Schaltelement-Drücke im Rahmen der Wählhebelschaltung "P → D1" gemäß Fig. 2 dargestellt, mit der Zeitachse als Abszisse und dem Druck p der beteiligten Schaltelemente als Ordinate. Mit p_A ist ein Druckverlauf des Schaltelementes A, mit p_C ein Druckverlauf des Schaltelementes C und mit p_D ein Druckverlauf des Schaltelementes D bezeichnet, wobei die Zeit wiederum mit t bezeichnet ist. Selbstverständlich sind alle dargestellten Druckverläufe als beispielhaft anzusehen, insbesondere hinsichtlich der Druckhöhe, der Rampenverläufe und des Timings der einzelnen (an sich bekannten) Schaltungsphasen (wie Schnellfüllphase, Druckausgleichs- bzw. Druckhaltephase, Lastübemahmephase, Verriegelungsdruck- bzw. Schaltungsenddruckphase). Auf der Zeitachse eingetragen sind fünf diskrete Zeitpunkte t_0, t_1, t_2, t_3, t_4 und t_5 eingetragen, an denen markante Übergänge in dem erfindungsgemäßen Schaltungsablauf stattfinden.

Der Zeitpunkt t_0 markiert den Ausgangszustand des erfindungsgemäßen Funktionsablaufs entsprechend der zweiten Zeile des Zustandsdiagramms gemäß Fig. 2. Zu diesem Zeitpunkt t_0 befindet sich das Getriebe (4) in Parkposition "P" mit eingelegter Parksperre, der über die Wählhebelposition detektierte Schaltbefehl "P → D1" des Fahrers zum gewünschten Verlassen der Parkposition "P" und Einlegen der Vorwärtsfahrstufe "D1" mit dem ersten Gang des Getriebes (4) als Anfahrgang ist erkannt, und über die Neigungserkennung des Getriebes (4) bzw. des Fahrzeugs ist erkannt, dass sich das Fahrzeug in Vorwärtsfahrtrichtung gesehen an einer Steigung mit einer zum Start der erfindungsgemäßen Funktion hinreichend großen (positiven) Fahrbahnneigung (grad) befindet. In dem dargestellten Beispiel ist zum Zeitpunkt t_0 keines der drei für den erfindungsgemäßen Schaltablauf relevanten Schaltelemente A, D und C geschaltet, d.h. alle für den erfindungsgemäßen Schaltablauf relevanten Schaltelemente A, D und C sind drucklos. Wenn für einen späteren Anfahrvorgang getriebebauartbedingt mehrere Reibschaltelemente benötigt werden, kann in einer anderen Ausgestaltung der Druckverläufe des erfindungsgemäßen Schaltablaufs abweichend von dem in Fig. 2A dargestellten Beispiel beispielsweise auch vorgesehen sein, dass zumindest eines der zum Anfahren benötigten Schaltelemente - hier insbesondere das sowohl im ersten Vorwärtsgang als auch im Rückwärtsgang benötigte Schaltelement D - schon in der Parkposition "P" mit Druckmittel vorbefüllt ist, so dass ein Kolben dieses Schaltelementes bereits an dem Lamellenpaket dieses Schaltelementes anliegt, oder dass eines (bzw. alle bis auf eines) der zum Anfahren benötigten Schaltelemente schon in der Parkposition "P" geschlossen sind.

Die Zeitpunkte t_0 und t_2 markieren die zeitlichen Eckpunkte des in der dritten Zeile des Zustandsdiagramms gemäß Fig. 2 dargestellten erfindungsgemäßen Verfahrensschritts. Innerhalb des Zeitbereichs zwischen den Zeitpunkten t_0 und t_2 werden die beiden Schaltelemente A und D zugeschaltet (Druckverläufe p_A und p_D), wobei hier beispielhaft das Schaltelement D zuerst auf einen Verriegelungsdruck gebracht wird, bevor das Schaltelement A Drehmoment übernimmt. Zum Zeitpunkt t_1 ist auch das Schaltelement A mit Druckmittel befüllt. Innerhalb des Zeitbereichs zwischen den Zeitpunkten t_1 und t_2 übernimmt das Schaltelement A Drehmoment. Entsprechend der Schaltlogik gemäß Fig. 1 des Getriebes (4) entspricht die angesteuerte Schaltelement-Kombination "A+D" dem ersten Vorwärtsgang des Getriebes (4), so dass sich der entsprechend der Fahrbahnneigung (grad) in Rückwärtsfahrtrichtung verspannte Antriebstrang (1) des Fahrzeugs mit beginnender Drehmomentübemahme des Schaltelementes A zu entspannen beginnt. Zum Zeitpunkt t_2 ist die formschlüssig eingelegte Parksperre (8) entspannt.

Die Zeitpunkte t_2 und t_3 markieren die zeitlichen Eckpunkte des in der vierten Zeile des Zustandsdiagramms gemäß Fig. 2 dargestellten erfindungsgemäßen Verfahrensschritts. Innerhalb des Zeitbereichs zwischen den Zeitpunkten t_2 und t_3 wird das Schaltelement C zugeschaltet (Druckverlauf p_C), so dass spätestens zum Zeitpunkt t_3 die Abtriebswelle (10) des Getriebes (4) gegen dessen Getriebegehäuse verblockt ist. Durch die verschiedenen Druckniveaus der Schaltdruckverläufe p_C, p_D der Schaltelemente C, D ist in Fig. 2A die Möglichkeit angedeutet, den jeweiligen Schaltdruck der im Rahmen der erfindungsgemäßen Funktion zugeschalteten Schaltelemente schaltelement-individuell zu steuern bzw. zu regeln. So ist im vorliegenden Ausführungsbeispiel der Schaltdruck p_C des Schaltelementes C, welches im Verlaufe der erfindungsgemäßen Funktion später nach dem mechanischen Auslegen der Parksperre (8) wieder abgeschaltet wird, beispielhaft niedriger als der Schaltdruck p_D des Schaltelementes D, welches auch nach dem Wiederabschalten des Schaltelementes C weiterhin geschaltet bleibt.

Die Zeitpunkte t_3 und t_4 markieren die zeitlichen Eckpunkte des in der fünften Zeile des Zustandsdiagramms gemäß Fig. 2 dargestellten erfindungsgemäßen Verfahrensschritts, in dem der Formschluss der Parksperre (8) mechanisch gelöst wird, so dass spätestens zum Zeitpunkt t_4 der Abtrieb (5) des Fahrzeugs nur noch durch den Reibschluss der Schaltelemente D und C (Druckverläufe p_D und p_C) gehalten wird. Getriebebauartbedingt nimmt das ebenfalls noch geschaltete Schaltelement A (Druckverlauf p_A) an dem reibschlüssigen Festsetzen des Abtrieb (5) des Fahrzeugs am Getriebegehäuse nicht teil. Entsprechend könnte das Schaltelement A abweichend zu der Darstellung in Fig. 2A auch unbetätigt, also drucklos sein, beispielsweise aber auch mit einem abgesenkten Druckniveau beaufschlagt sein.

Der Zeitpunkt t_4 markiert auch den Startpunkt des in der sechsten Zeile des Zustandsdiagramms gemäß Fig. 2 dargestellten erfindungsgemäßen Verfahrensschritts. Wie in Fig. 2A ersichtlich, wird beginnend zum Zeitpunkt t_4 der Druck p_C des Schaltelementes C über einen definierten Algorithmus abgesenkt. Vorzugsweise wird die Übertragungsfähigkeit dieses Schaltelementes C dabei derart verringert, dass ein Vorspannmoment des Abtriebes (5) des Fahrzeugs stetig abgebaut wird. In dem vorliegenden Ausführungsbeispiel zeigt der Druckverlauf p_C einen anfänglichem negativen Drucksprung auf einen definierten Wert und eine nachfolgende zweistufiger Druckabbaurampe. Je nach Applikation des Druckabbaus am Schaltelement C kann der Fahrer das Fahrzeug mehr oder weniger schnell nach dem Zeitpunkt t_4 entsprechend seinem Wunsch anfahren. Der Fachmann wird bei Bedarf auch einen anderen Algorithmus zum Abschalten des Schaltelementes C vorsehen, beispielsweise die Reduzierung der Übertragungsfähigkeit des Schaltelementes C ausschließlich sprungartig oder über eine frei applizierbare Rampenfunktion oder über eine definierte Filterfunktion wenigstens annähernd parabelförmig. Spätestens zum Zeitpunkt t_5 ist das zum Verblocken des Abtriebs (5) zuvor zugeschaltete Schaltelement C wieder drucklos und das Getriebe (4) befindet sich schaltelementseitig in der normalen Schaltstellung des ersten Vorwärtsgangs. Je nach Applikation des Druckabbaus des Schaltelementes C wird das Fahrzeug aber schon mehr oder weniger kurz nach dem Zeitpunkt t_4 in die gewünschte Fahrrichtung anfahren können.

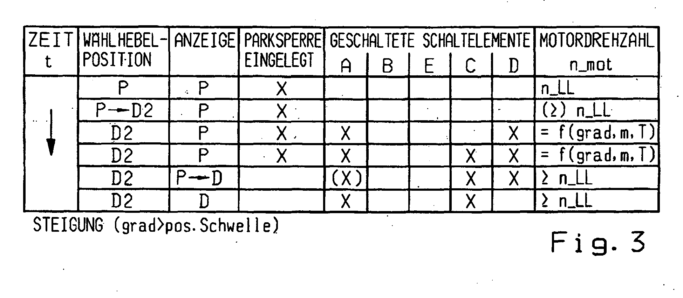

Der zuvor anhand der Figuren 2 und 2A für die Wählhebelschaltung "P → D1" eines an einer Steigung mit formschlüssig eingelegter Parksperre stehenden Fahrzeugs beschriebene erfindungsgemäße Verfahrensablauf ist auch auf andere Wählhebelschaltungen sinngemäß übertragbar. So zeigt Fig. 3 ein zweites beispielhaftes Zustandsdiagramm des erfindungsgemäßen Verfahrens, nunmehr für eine über den Wählhebel vorgegebene Fahrerwunschvorgabe "P → D2", wobei das Fahrzeug zum Zeitpunkt dieser Wählhebelbetätigung durch den Fahrer wie in Fig. 2 in Vorwärtsfahrtrichtung gesehen an einer hinreichend steilen Fahrbahn-Steigung mit aktivierter bzw. eingelegter Parksperre (8) steht. Die Wählhebelstellung "P" bezeichnet wieder die Parkstellung des Getriebes (4) bzw. des Fahrzeugs, die Wählhebelstellung "D2" eine Vorwärtsfahrt mit Anfahren im zweiten Gang. Aus Fig. 3 ist sofort ersichtlich, dass die ersten fünf Zeilen des Zustandsdiagramms bis auf die Bezeichnung der Wählhebelposition identisch sind mit den ersten fünf Zeilen des Zustandsdiagramms gemäß Fig. 2, weshalb auf deren nochmalige Beschreibung an dieser Stelle verzichtet werden kann.

Die sechste Zeile des Zustandsdiagramms gemäß Fig. 3 beschreibt wieder den letzten Verfahrensschritt der erfindungsgemäßen Funktion, nachdem die Parksperre (8) ausgelegt ist. Im Unterschied zu Fig. 2 wird nunmehr das Getriebe (4) schaltelementseitig in die normale Schaltstellung des zweiten Vorwärtsgangs überführt. Entsprechend der Schaltlogik gemäß Fig. 1 sind im zweiten Vorwärtsgang die Schaltelemente A und C geschlossen, folglich wird in dem letzten Verfahrensschritt gemäß Fig. 3 nunmehr das Schaltelement D abgeschaltet, wohingegen die beiden anderen zuvor zugeschalteten Schaltelemente A und C angesteuert bleiben. Entsprechend ändert sich die den Schaltstatus des Schaltelementes D betreffende Zustandsinformation.

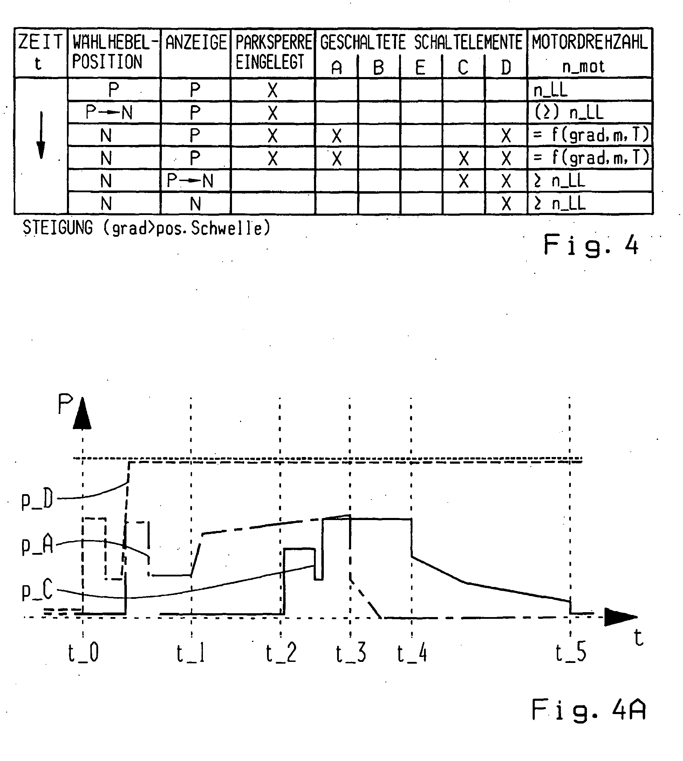

In Anlehnung an die Figuren 2 und 2A wird im Folgenden anhand der Figuren 4 und 4B ein Schaltablauf gemäß des erfindungsgemäßen Verfahrens beschrieben, wenn das Fahrzeug in Vorwärtsfahrtrichtung gesehen an einer hinreichend steilen Steigung steht, der Fahrer des Fahrzeugs über den Wählhebel allerdings einen Fahrerwunsch "P → N" zum Verlassen der Parkposition "P" und Einlegen des kraftschlussfreien Neutralbereichs "N" des Getriebes (4) vorgibt. In Fig. 4 ist das entsprechende Zustandsdiagramm mit dem zeitlichen Ablauf der einzelnen erfindungsgemäßen Verfahrensschritte dargestellt, in Fig. 4A ein zu diesem Zustandsdiagramm korrespondierender zeitlicher Verlauf der Schaltelement-Drücke der verfahrensbeteiligten Schaltelemente.

Aus Fig. 4 ist sofort ersichtlich, dass die ersten vier Zeilen des Zustandsdiagramms bis auf die Bezeichnung der Wählhebelposition identisch sind mit den ersten vier Zeilen des Zustandsdiagramms gemäß Fig. 2, weshalb auf deren nochmalige Beschreibung an dieser Stelle verzichtet werden kann. Auch die korrespondierenden Schaltdruckverläufe p_D, p_A, p_C der Schaltelemente D, A und C gemäß Fig. 4A sind bis zum Zeitpunkt t_3 identisch zu den Schaltdruckverläufe p_D, p_A, p_C gemäß Fig. 2A.

Die fünfte Zeile des Zustandsdiagramms gemäß Fig. 4 beschreibt wieder den Verfahrensschritt der erfindungsgemäßen Funktion, in dem der Formschluß der Parksperre gelöst wird, nachdem das Sperrelement der Parksperre hinreichend weit entspannt ist durch das Zuschalten einer Schaltelement-Kombination "A+D", die ein Verdrehen des Antriebstrangs entgegen seiner Verspannungsrichtung zur Folge hat, und nachdem der Abtrieb (5) des Fahrzeugs über eine Schaltelement-Kombination "C+D" reibschlüssig arretiert ist. Das zur fünften Zeile des Zustandsdiagramms gemäß Fig. 4 korrespondierende Zeitfenster in Fig. 4A ist der Zeitbereich zwischen den Zeitpunkten t_3 und t_4. Entsprechend der Fahrerwunschvorgabe "N" wird nun das zur Entspannung des Antriebs (5) des Fahrzeugs bzw. zur Entspannung des formschlüssig eingerasteten Sperrelementes der Parksperre (8) zuvor zugeschaltete Schaltelement A wieder abgeschaltet. Im Prinzip ist es unerheblich, ob die Parksperre (8) innerhalb dieses Verfahrensschrittes zeitlich gesehen vor, während oder nach dem Abschalten des Schaltelementes A mechanisch ausgelegt wird, da das Schaltelement A an dem reibschlüssigen Arretieren des Abtriebs (5) des Fahrzeugs am Getriebegehäuse nicht beteiligt ist. In dem vorliegenden Ausführungsbeispiel gemäß Fig. 4A wird das Schaltelement A beginnend mit dem Zeitpunkt t_3 abgeschaltet (Druckverlauf p_A), beispielhaft mit einem schlagartigen Druckabbau bis auf einen definierten Wert mit anschließender Druckabbaurampe. Während des Auslegens der Parksperre (8) verbleiben die Schaltelemente D und C (Druckverläufe p_D und p_C) geschaltet mit ihrem jeweiligen Druckniveau, welches zum Zeitpunkt t_3 anliegt. Das durch die Hangabtriebskraft des Fahrzeugs auf die Abtriebswelle (10) des Getriebes (4) wirkende Drehmoment wird also nur durch diese beiden Schaltelemente D, C am Getriebegehäuse abgestützt.

Die sechste Zeile des Zustandsdiagramms gemäß Fig. 4 beschreibt wieder den letzten Verfahrensschritt der erfindungsgemäßen Funktion, in dem das Schaltelement C, mittels dessen die Abtriebswelle (10) des Getriebe (4) zuvor im entlasteten bzw. teilentlasteten Zustand der vorschlüssig eingelegten Parksperre (8) blockiert wurde, nunmehr gesteuert oder geregelt geöffnet wird. Im Unterschied zu Fig. 2 ist das Getriebe (4) entsprechend der Fahrerwunschvorgabe nunmehr kraftschlussfrei, wobei hier beispielhaft das Schaltelement D auf seinem Verriegelungsdruck angesteuert verbleibt, um die Reaktionszeit bei einem späteren Gangeinlegen zur verkürzen. Der in Fig. 4A dargestellte beispielhafte Druckabbau (Druckverlauf p_C) des Schaltelementes C ab dem Zeitpunkt t_4 entspricht dem Druckabbau gemäß Fig. 2A, zum Zeitpunkt t_5 ist das Schaltelement C drucklos.

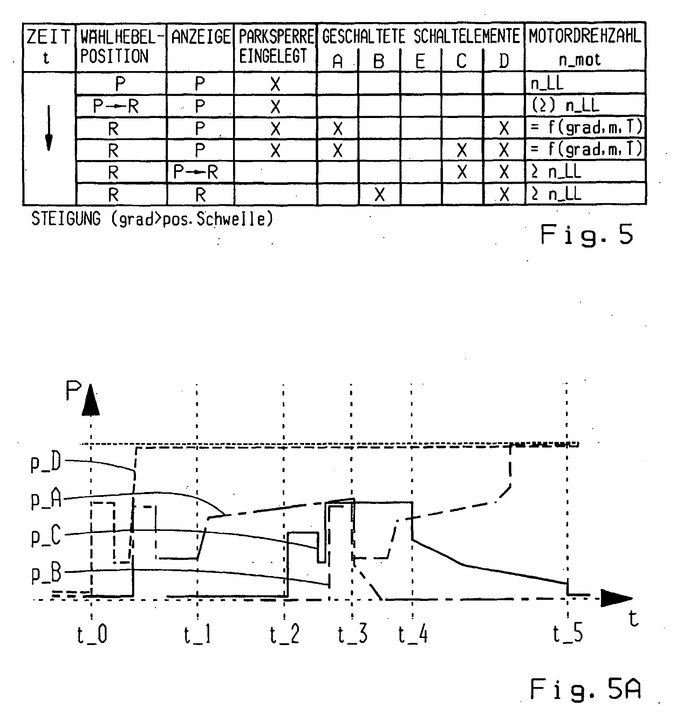

In Anlehnung an die Figuren 2 und 2A wird anhand der Figuren 5 und 5B nun ein Schaltablauf gemäß des erfindungsgemäßen Verfahrens beschrieben, wenn das Fahrzeug in Vorwärtsfahrtrichtung gesehen an einer hinreichend steilen Steigung steht, der Fahrer des Fahrzeugs über den Wählhebel allerdings einen Fahrerwunsch "P → R" zum Verlassen der Parkposition "P" und Einlegen des Rückwärtsgangs "R" des Getriebes (4) vorgibt. In Fig. 5 ist das entsprechende Zustandsdiagramm mit dem zeitlichen Ablauf der einzelnen erfindungsgemäßen Verfahrensschritte dargestellt, in Fig. 5A ein zu diesem Zustandsdiagramm korrespondierender zeitlicher Verlauf der Schaltelement-Drücke der verfahrensbeteiligten Schaltelemente.

Aus Fig. 5 ist sofort ersichtlich, dass die ersten vier Zeilen des Zustandsdiagramms bis auf die Bezeichnung der Wählhebelposition identisch sind mit den ersten vier Zeilen des Zustandsdiagramms gemäß Fig. 2 bzw. des Zustandsdiagramms gemäß Fig. 4, weshalb auf deren nochmalige Beschreibung an dieser Stelle verzichtet werden kann. Auch die korrespondierenden Schaltdruckverläufe p_D, p_A, p_C der Schaltelemente D, A und C gemäß Fig. 5A sind bis zum Zeitpunkt t_3 identisch zu den Schaltdruckverläufe p_D, p_A, p_C gemäß Fig. 2A bzw. Fig. 4A.

Die fünfte Zeile des Zustandsdiagramms gemäß Fig. 5 beschreibt wieder den Verfahrensschritt der erfindungsgemäßen Funktion, in dem der Formschluß der Parksperre gelöst wird, nachdem das Sperrelement der Parksperre hinreichend weit entspannt ist durch das Zuschalten einer Schaltelement-Kombination "A+D", die ein Verdrehen des Antriebstrangs entgegen seiner Verspannungsrichtung zur Folge hat, und nachdem der Abtrieb (5) des Fahrzeugs über eine Schaltelement-Kombination "C+D" reibschlüssig am Getriebegehäuse festgesetzt ist. Das zur fünften Zeile des Zustandsdiagramms gemäß Fig. 5 korrespondierende Zeitfenster in Fig. 5A ist der Zeitbereich zwischen den Zeitpunkten t_3 und t_4. Entsprechend der Fahrerwunschvorgabe "R" wird nun die Schaltung in den Rückwärtsgang vorbereitet, indem das zuvor zur Entspannung des Abtriebs (5) des Fahrzeugs bzw. zur Entspannung des Sperrelementes der Parksperre zugeschaltete Schaltelement A (Druckverlauf p_A) wieder abgeschaltet wird und das für den Rückwärtsgang benötigte Schaltelement B (Druckverlauf p_B) zugeschaltet wird, wobei das Schaltelement D, welche gemäß der in Fig. 1A dargestellten Schaltlogik des Getriebes (4) zusammen mit dem Schaltelement B im Rückwärtsgang benötigt wird, unverändert (hier auf seinem Verriegelungsdruck) geschaltet bleibt. Im Prinzip ist es unerheblich, ob die Parksperre (8) innerhalb dieses Verfahrensschrittes zeitlich gesehen vor, während oder nach dem Abschalten des Schaltelementes A mechanisch ausgelegt wird, da dieses Schaltelement A an der reibschlüssigen Arretierung des Abtriebs (5) nicht beteiligt ist. In dem vorliegenden Ausführungsbeispiel gemäß Fig. 5A wird das Schaltelement A beginnend mit dem Zeitpunkt t_3 abgeschaltet (Druckverlauf p_A), beispielhaft mit einem schlagartigen Druckabbau bis auf einen definierten Wert mit anschließender Druckabbaurampe. In dem vorliegenden Ausführungsbeispiel gemäß Fig. 5A startet der Befüllvorgang des Schaltelementes B (Druckverlauf p_B) beispielhaft bereits vor dem Zeitpunkt t_3, um die Reaktionszeit der Wählhebelschaltung "P → R" zu verkürzen, indem eine an sich bekannte Schnellfüllphase des Schaltelementes B hinreichend vor dem Zeitpunkt t_3 startet und zum Zeitpunkt t_3 endet, gefolgt von einer an sich bekannte Füllausgleichsphase beginnend zum Zeitpunkt t_3. In einer günstigen Ausgestaltung der Funktion erfolgt der Druckaufbau des Schaltelementes B (Druckverlauf p_B) derart, dass dieses Schaltelement B spätestens zum Zeitpunkt t_4 drehmomentführend ist. Während des Auslegens der Parksperre (8) verbleiben die Schaltelemente D und C (Druckverläufe p_D und p_C) geschaltet mit ihrem jeweiligen Druckniveau, welches zum Zeitpunkt t_3 anliegt, und stützt das durch die Hangabtriebskraft des Fahrzeugs auf die Abtriebswelle (10) des Getriebes (4) wirkende Drehmoment am Getriebegehäuse ab.

Die sechste Zeile des Zustandsdiagramms gemäß Fig. 5 beschreibt wieder den letzten Verfahrensschritt der erfindungsgemäßen Funktion, in dem das Schaltelement C, mittels dessen die Abtriebswelle (10) des Getriebe (4) zuvor im entlasteten bzw. teilentlasteten Zustand der formschlüssig eingelegten Parksperre (8) blockiert wurde, nunmehr gesteuert oder geregelt geöffnet wird. Im Unterschied zu Fig. 2 ist in dem Getriebe (4) nunmehr eine Schaltelement-Kombination "B+D" geschaltet, die der Fahrerwunschvorgabe "Rückwärtsgang" entspricht. In Fig. 5A ist ersichtlich, dass in dem dargestellten Ausführungsbeispiel der Schaltdruck p_B des Schaltelementes B beginnend ab dem Zeitpunkt t_4 auf Verriegelungsdruck angehoben wird, während des Schaltdruck p_C des Schaltelementes C beginnend ab dem Zeitpunkt t_4 abgebaut wird. Je nach Applikation des Druckabbaus des Schaltelementes C wird das Fahrzeug mehr oder weniger kurz nach dem Zeitpunkt t_4 in die gewünschte Fahrrichtung anfahren können. Zum Zeitpunkt t_5 ist das Schaltelement C wieder drucklos.

Abweichend von der Darstellung in Fig. 5 bzw. 5A kann bei dem vorliegenden beispielhaften Getriebeschema auch vorgesehen sein, dass der Abtrieb (5) des Fahrzeugs nicht durch das gleichzeitige Schließen der beiden Schaltelemente C und D am Getriebegehäuse festgesetzt wird, sondern durch zusätzliches Schließen des Schaltelements B neben den bereits geschlossenen Schaltelementen A und D. Da genau die Schaltelement-Kombination "B+D" auch für den vom Fahrer gewünschten Rückwärtsgang "R" benötigt werden, muss das Getriebe (4) in diesem Fall im letzten Verfahrensschritt durch Öffnen des Schaltelements A auf diese Schaltelement-Kombination "B+D" umgeschaltet werden. Dadurch, dass ein Schaltelement weniger am Verfahren beteiligt ist und ein Befüllvorgang für ein Schaltelement weniger notwendig ist, kann ein Reaktionszeitgewinn erzielt werden.

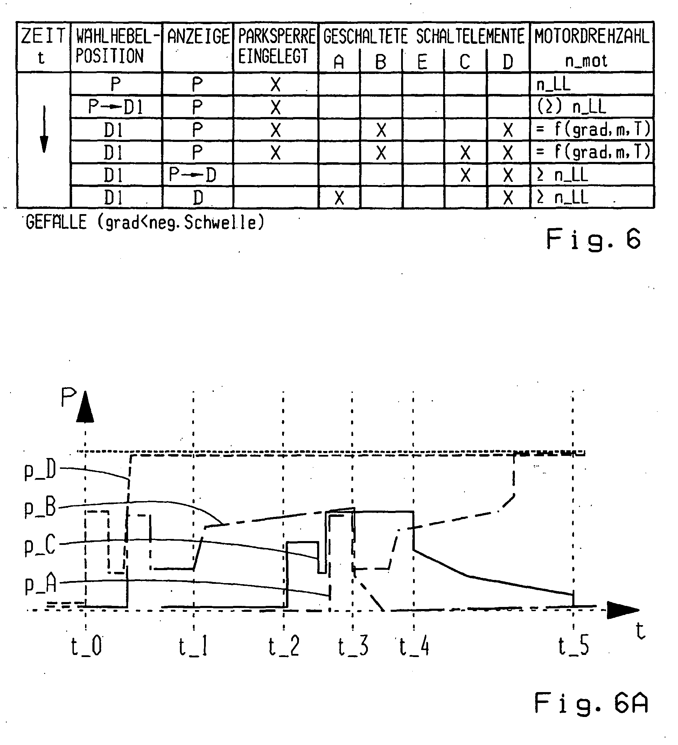

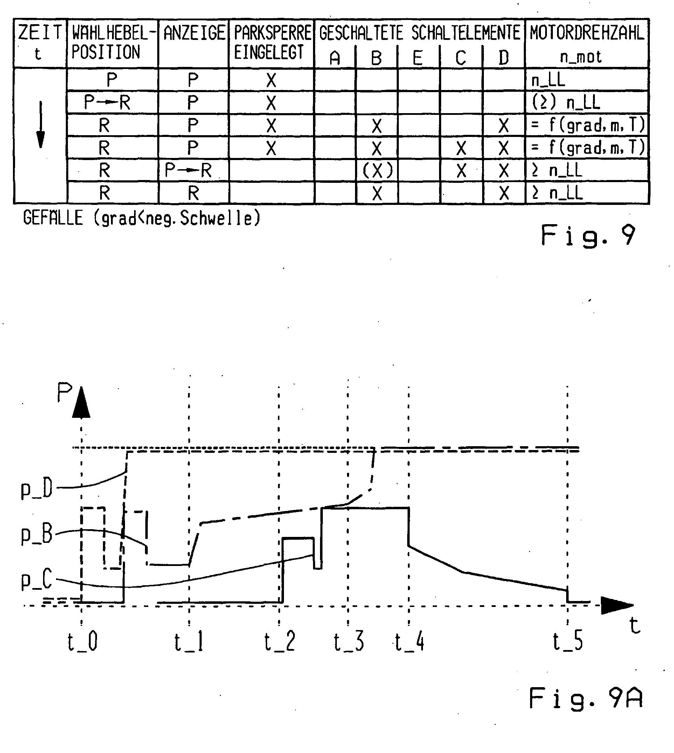

Während die vorigen Figuren 2 und 2A bis 5 und 5A Wählhebelschaltungen betrafen, die der Fahrers bei in Vorwärtsfahrtrichtung gesehen an einer Steigung (mit hinreichend großer positiver Fahrbahnneigung) stehendem Fahrzeug mit formschlüssig eingelegter Parksperre vorgibt, betreffen die folgenden Figuren 6 und 6A bis 9 und 9A Wählhebelschaltungen, die der Fahrer bei in Vorwärtsfahrtrichtung gesehen in einem Gefälle (mit hinreichend negativer Fahrbahnneigung) stehendem Fahrzeug mit formschlüssig eingelegter Parksperre vorgibt.

Fig. 6 zeigt nun ein erstes beispielhaftes Zustandsdiagramm des erfindungsgemäßen Verfahrens für eine über den Wählhebel vorgegebene Fahrerwunschvorgabe "P → D1", wobei das Fahrzeug zum Zeitpunkt dieser Wählhebelbetätigung durch den Fahrer in Vorwärtsfahrtrichtung gesehen in einem Fahrbahn-Gefälle mit aktivierter bzw. eingelegter Parksperre (8) steht. Wie in Fig. 2 bezeichnet die Wählhebeistellungen "P" die Parkstellung des Getriebes (4) bzw. des Fahrzeugs und die Wählhebelstellung "D1" einen Vorwärtsfahrbereich mit automatischer Gangwahl und Anfahrübersetzung "1. Gang". Wie in Fig. 2 entspricht dieses Zustandsdiagramm gemäß Fig. 6 einem zeitlichen Ablauf der einzelnen erfindungsgemäßen Verfahrensschritte beim Auslegen der Parksperre (8), was durch einen eine Zeit t charakterisierenden Pfeil verdeutlicht wird. Fig. 6A zeigt den zu Fig. 6 korrespondierenden zeitlichen Verlauf der Schaltdrücke der an der Wählhebelschaltung beteiligten Schaltelemente, wobei die hierin dargestellten Druckhöhen und Rampenverläufe und das Timing der einzelnen Schaltungsphasen (wie Schnellfüllphase, Druckausgleichs- bzw. Druckhaltephase, Lastübemahmephase, Verriegelungsdruck- bzw. Schaltungsenddruckphase) wieder als beispielhaft anzusehen sind.

Die ersten beiden Zeilen des Zustandsdiagramms gemäß Fig. 6 sind identisch mit den ersten beiden Zeilen des Zustandsdiagramms gemäß Fig. 2. Die erste Zeile des Zustandsdiagramms beschreibt den Ausgangszustand vor der Betätigung des Wählhebels durch den Fahrer: Die Wählhebelposition ist die Parkposition "P", die Parksperre (8) ist mechanisch eingelegt und dadurch der Abtrieb (5) des Fahrzeugs formschlüssig blockiert, alle Schaltelemente A bis E des Getriebes (4) sind geöffnet, die Drehzahl n_mot der Antriebsmaschine (2) entspricht einer Leerlaufrehzahl n_LL, wobei das Fahrzeug hier in Vorwärtsfahrtrichtung gesehen in einem Gefälle steht, dessen Fahrbahnneigung grad kleiner als ein vordefinierter negativer Schwellwert ist. Die Wählhebelpositionsanzeige zeigt, sofern vorhanden, "P" an und informiert so den Fahrer über die aktuelle Parkposition mit formschlüssig eingelegter Parksperre (8). Die zweite Zeile des Zustandsdiagramms beschreibt den Zustand, in dem der Fahrer die Wählhebelschaltung "P → D1" anfordert, also wie in Fig. 2 das Einlegen des ersten Vorwärtsgangs mit den hierzu erforderlichen Schaltelementen A und D. Während der Wählhebelbetätigung "P → D1" durch den Fahrer ist die Parksperre (8) immer noch mechanisch eingelegt, alle Schaltelemente A bis E des Getriebes (4) sind geöffnet, die Antriebsmaschine (2) dreht in der Regel mit Leerlaufdrehzahl n_LL, kann aber auch schon seitens einer Motorsteuerung mit leicht angehobener Drehzahl n_mot rotieren. Im vorliegenden Fall erkennt die Neigungserkennung des Getriebes (4) bzw. des Fahrzeugs eine ausreichend kleine negative Fahrbahnneigung grad, also ein Stehen des Fahrzeugs in Vorwärtsfahrtrichtung gesehen in einem hinreichend steilen Gefälle.

Die dritte Zeile des Zustandsdiagramms beschreibt den nachfolgenden Verfahrensschritt der erfindungsgemäßen Funktion, in dem die Verspannung des Antriebstrang (1) des Fahrzeugs zumindest soweit reduziert wird, dass ein nachfolgendes Lösen des Formschlusses der Parksperre (8) keinen störenden Entlastungsstoß mehr verursacht. Wie bereits gesagt, ist die Verspannungsrichtung des Antriebstrangs (1) des Fahrzeugs bei formschlüssig eingelegter Parksperre (8) unabhängig davon, ob die aus der Parkstellung heraus angewählte zukünftige Fahrrichtung vorwärts oder rückwärts ist, sondern nur abhängig von der Richtung der Fahrbahnneigung, wobei das auf das Sperrelement der Parksperre (8) wirkende Verspannungsmoment eine Funktion der tatsächlichen Hangabtriebskraft des Fahrzeugs, also primär eine Funktion der aktuellen Fahrzeugmasse m und der Fahrbahnneigung grad ist. Da im vorliegenden Fall das Fahrzeug in Vorwärtsfahrtrichtung gesehen in einem Gefälle steht, wirkt die Verspannung des Antriebstrangs (1) des Fahrzeugs im unterschied zu Fig. 2 nunmehr in Vorwärtsfahrtrichtung. Zur Entspannung des Antriebstrangs und des formschlüssig eingerasteten Sperrelementes der Parksperre wird deshalb erfindungsgemäß in dem Verfahrensschritt der dritten Zeile des Zustandsdiagramms gemäß Fig. 6 - bei unverändert eingelegter Parksperre (8) und unveränderter Anzeige "P" der Wählhebelpositionsanzeige - eine Schaltelement-Kombination angesteuert, die dem Rückwärtsgang des Getriebes (4) entspricht. Dabei werden die beiden reibschlüssigen Schaltelemente B und D zur Drehmomentübertragung derart in Schlupf gebracht, dass die über die Abtriebswelle (10) des Getriebes (4) auf das Sperrelement bzw. die Parksperrenklinke der Parksperre (8) wirkende (Hangabtriebs-)Kraft aufgehoben oder zumindest stark verringert oder sogar leicht überkompensiert wird. Damit in diesem Betriebszustand im Getriebe (4) eine ausreichende Druckmittelversorgung des Getriebes (4) bzw. das zur Abstützung der Hangabtriebskraft des Fahrzeugs erforderliche Getriebeeingangsdrehmoment gewährleistet ist, kann in einer Ausgestaltung der Erfindung ähnlich wie in Fig. 2 vorgesehen sein, dass die im Leerlauf üblicherweise sehr niedrige Drehzahl n_mot der Antriebsmaschine (2) und bei Bedarf auch das Drehmoment der Antriebsmaschine (2) in dem Verfahrensschritt der dritten Zeile des Zustandsdiagramms angehoben wird, wobei eine derartige Drehzahl- bzw. Drehmomentanhebung der Antriebsmaschine (2) wie in Fig. 2 beispielsweise als Funktion der aktuellen Fahrbahnneigung grad und/oder der Fahrzeugmasse m und/oder einer Getriebetemperatur T und/oder von Parametern des Anfahrelementes (3) bzw. Drehmomentwandlers des Getriebes (4) vorgegeben bzw. gesteuert sein kann.

Vergleichbar zu Fig. 2A, markieren die Zeitpunkte t_0 und t_2 in der zu Fig. 6 korrespondierenden Fig. 6A die zeitlichen Eckpunkte des in der dritten Zeile des Zustandsdiagramms gemäß Fig. 6 dargestellten erfindungsgemäßen Verfahrensschritts. Zum Zeitpunkt t_0 ist in dem dargestellten Beispiel keines der für den erfindungsgemäßen Schaltablauf relevanten Schaltelemente geschaltet, d.h. alle für den erfindungsgemäßen Schaltablauf relevanten Schaltelemente sind noch drucklos. Da im vorliegenden Fall für einen späteren Anfahrvorgang getriebebauartbedingt wieder zwei Reibschaltelemente benötigt werden, kann in einer anderen Ausgestaltung der Druckverläufe des erfindungsgemäßen Schaltablaufs abweichend von dem in Fig. 6A dargestellten Beispiel beispielsweise auch vorgesehen sein, dass zumindest eines der zum Anfahren benötigten Schaltelemente - hier insbesondere das sowohl im ersten Vorwärtsgang als auch im Rückwärtsgang benötigte Schaltelement D - schon in der Parkposition "P" mit Druckmittel vorbefüllt ist. Innerhalb des Zeitbereichs zwischen den Zeitpunkten t_0 und t_2 werden die beiden Schaltelemente B und D zugeschaltet (Druckverläufe p_B und p_D), wobei hier beispielhaft das Schaltelement D zuerst auf einen Verriegelungsdruck gebracht wird, bevor das Schaltelement B Drehmoment übernimmt. Zum Zeitpunkt t_1 ist auch das Schaltelement B mit Druckmittel befüllt. Innerhalb des Zeitbereichs zwischen den Zeitpunkten t_1 und t_2 übernimmt das Schaltelement B Drehmoment. Entsprechend der Schaltlogik gemäß Fig. 1 des Getriebes (4) entspricht die angesteuerte Schaltelement-Kombination "B+D" dem Rückwärtsgang des Getriebes (4), so dass sich der entsprechend der Fahrbahnneigung (grad) in Vorwärtsfahrtrichtung verspannte Antriebstrang (1) des Fahrzeugs mit beginnender Drehmomentübemahme des Schaltelementes B zu entspannen beginnt. Zum Zeitpunkt t_2 ist die formschlüssig eingelegte Parksperre (8) entspannt. Die vierte Zeile des Zustandsdiagramms gemäß Fig. 6 beschreibt den nachfolgenden Verfahrensschritt der erfindungsgemäßen Funktion, in dem der Abtrieb (5) des Fahrzeugs bei entlasteter bzw. teilentlasteter Parksperre (8) durch Betätigung eines weiteren reibschlüssigen Schaltelementes am Gehäuse des Getriebes (4) festgesetzt wird. Hierzu wird - bei unverändert eingelegter Parksperre (8) und unveränderter Anzeige "P" der Wählhebelpositionsanzeige - zusätzlich zu den im vorigen Verfahrensschritt zugeschalteten Schaltelementen B und D das Schaltelement C zugeschaltet. Dabei ist das jeweilige Druckniveau der drei Schaltelemente B, D und C so bemessen, dass das Getriebe (4) in sich verblockt ist bzw. dass das durch die Hangabtriebskraft des Fahrzeugs auf die Abtriebswelle (10) der Getriebes (4) wirkende Drehmoment am Getriebegehäuse abgestützt wird. Hierbei kann ähnlich wie im vorigen Verfahrensschritt eine Anhebung der Drehzahl n_mot der Antriebsmaschine (2) auf ein Niveau größer der Leerlaufdrehzahl n_LL und eine Anhebung des Drehmomentes der Antriebsmaschine (2) vorgesehen sein, um die Druckmittelversorgung des Getriebes (4) und das zur Abstützung der Hangabtriebskraft erforderliche Getriebeeingangsmoment zur gewährleisten, wobei eine derartige Drehzahl- bzw. Drehmomentanhebung nach einem ähnlichen Algorithmus als Funktion der aktuellen Fahrbahnneigung grad und/oder der Fahrzeugmasse m und/oder einer Getriebetemperatur T und/oder von Parametern des Anfahrelementes (3) bzw. Drehmomentwandlers des Getriebes (4) erfolgen kann wie im vorigen Verfahrensschritt beschrieben.

In der zu Fig. 6 korrespondierenden Fig. 6A markieren die Zeitpunkte t_2 und t_3 die zeitlichen Eckpunkte des in der vierten Zeile des Zustandsdiagramms in Fig. 6 dargestellten erfindungsgemäßen Verfahrensschritts. Innerhalb des Zeitbereichs zwischen den Zeitpunkten t_2 und t_3 wird das Schaltelement C zugeschaltet (Druckverlauf p_C), so dass spätestens zum Zeitpunkt t_3 die Abtriebswelle (10) des Getriebes (4) gegen dessen Getriebegehäuse verblockt ist. Wie in Fig. 2A ist auch in Fig. 6A durch die verschiedenen Druckniveaus der Schaltdruckverläufe p_C, p_D der Schaltelemente C, D die Möglichkeit angedeutet, den jeweiligen Schaltdruck der im Rahmen der erfindungsgemäßen Funktion zugeschalteten Schaltelemente schaltelement-individuell zu steuern bzw. zu regeln. So ist im vorliegenden Ausführungsbeispiel der Schaltdruck p_C des Schaltelementes C, welches im Verlaufe der erfindungsgemäßen Funktion später nach dem mechanischen Auslegen der Parksperre (8) wieder abgeschaltet wird, beispielhaft niedriger als der Schaltdruck p_D des Schaltelementes D, welches auch nach dem Wiederabschalten des Schaltelementes C weiterhin geschaltet bleibt.

Die fünfte Zeile des Zustandsdiagramms gemäß Fig. 6 beschreibt den nachfolgenden Verfahrensschritt der erfindungsgemäßen Funktion, in dem der Formschluss der Parksperre (8) gelöst wird, die Parksperre (8) also mechanisch ausgelegt wird. Entsprechend ändert sich die den Einlegestatus der Parksperre (8) betreffende Zustandsinformation und die - soweit vorhanden - Anzeige zur Wählhebelposition. Das Schaltelement B, welches an der reibschlüssigen Arretierung des Abtriebs (5) des Fahrzeugs nicht beteiligt ist und für den im weiteren Verlauf der Funktion entsprechend dem vorgegebenen Fahrerwunsch noch einzulegenden ersten Vorwärtsgang auch nicht benötigt wird, wird abgeschaltet, wohingegen die anderen beiden zuvor zugeschalteten Schaltelemente D und C geschaltet bleiben. Eine eventuell zuvor aktivierte Drehzahlanhebung für die Antriebsmaschine (2) wird in diesem Verfahrenschritt zurückgesetzt, so dass die Antriebsmaschine (2) nunmehr wieder mit Leerlaufdrehzahl n_LL oder mit einer - durch eine Leerlaufregelung der Motorsteuerung der Motorlast angepassten - leicht erhöhten Drehzahl n_mot rotiert.

Das zur fünfte Zeile des Zustandsdiagramms gemäß Fig. 6 korrespondierende Zeitfenster in Fig. 6A ist der Zeitbereich zwischen den Zeitpunkten t_3 und t_4. Entsprechend der Fahrerwunschvorgabe "D1" wird nun die Schaltung in den ersten Vorwärtsgang vorbereitet, indem das zuvor zur Entspannung des Abtriebs (5) des Fahrzeugs bzw. zur Entspannung des Sperrelementes der Parksperre zugeschaltete Schaltelement B (Druckverlauf p_B) wieder abgeschaltet wird und das im ersten Vorwärtsgang benötigte Schaltelement A (Druckverlauf p_A) zugeschaltet wird, wobei das Schaltelement D, welche gemäß der in Fig. 1A dargestellten Schaltlogik des Getriebes (4) zusammen mit dem Schaltelement A im ersten Vorwärtsgang benötigt wird, unverändert (hier auf seinem Verriegelungsdruck) geschaltet bleibt. Im Prinzip ist es unerheblich, ob die Parksperre (8) innerhalb dieses Verfahrensschrittes zeitlich gesehen vor, während oder nach dem Abschalten des Schaltelementes B mechanisch ausgelegt wird, da dieses Schaltelement B an der reibschlüssigen Arretierung des Abtriebs (5) nicht beteiligt ist. In dem vorliegenden Ausführungsbeispiel gemäß Fig. 6A wird das Schaltelement B beginnend mit dem Zeitpunkt t_3 abgeschaltet (Druckverlauf p_B), beispielhaft über eine anfänglich steile, zweistufigen Druckabbaurampe. Spätestens zum Zeitpunkt t_4 ist das Schaltelement B drucklos. In dem vorliegenden Ausführungsbeispiel gemäß Fig. 6A startet der Befüllvorgang des Schaltelementes A (Druckverlauf p_A) beispielhaft bereits vor dem Zeitpunkt t_3, um die Reaktionszeit der Wählhebelschaltung "P → D1" zu verkürzen, indem eine an sich bekannte Schnellfüllphase des Schaltelementes A hinreichend vor dem Zeitpunkt t_3 startet und zum Zeitpunkt t_3 endet, gefolgt von einer an sich bekannte Füllausgleichsphase beginnend zum Zeitpunkt t_3. In einer günstigen Ausgestaltung der Funktion erfolgt der Druckaufbau des Schaltelementes A (Druckverlauf p_A) derart, dass dieses Schaltelement A spätestens zum Zeitpunkt t_4 drehmomentführend ist. Während des Auslegens der Parksperre (8) verbleiben die Schaltelemente D und C (Druckverläufe p_D und p_C) geschaltet mit ihrem jeweiligen Druckniveau, welches zum Zeitpunkt t_3 anliegt, und stützt das durch die Hangabtriebskraft des Fahrzeugs auf die Abtriebswelle (10) des Getriebes (4) wirkende Drehmoment am Getriebegehäuse ab.

Die sechste Zeile des Zustandsdiagramms gemäß Fig. 6 beschreibt den nachfolgenden letzten Verfahrensschritt der erfindungsgemäßen Funktion, in dem das Schaltelement C, mittels dessen die Abtriebswelle (10) des Getriebe (4) zuvor im entlasteten bzw. teilentlasteten Zustand der formschlüssig eingelegten Parksperre (8) blockiert wurde, wieder gesteuert oder geregelt geöffnet wird. In dem Getriebe (4) ist nunmehr eine Schaltelement-Kombination "A+D" geschaltet, die der Fahrerwunschvorgabe "erster Vorwärtsgang" entspricht. In Fig. 6A ist ersichtlich, dass in dem dargestellten Ausführungsbeispiel der Schaltdruck p_A des Schaltelementes A beginnend ab dem Zeitpunkt t_4 auf Verriegelungsdruck angehoben wird, während des Schaltdruck p_C des Schaltelementes C beginnend ab dem Zeitpunkt t_4 über einen definierten Algorithmus abgebaut wird. Je nach Applikation des Druckabbaus des Schaltelementes C wird das Fahrzeug mehr oder weniger kurz nach dem Zeitpunkt t_4 in die gewünschte Fahrrichtung anfahren können. Zum Zeitpunkt t_5 ist das Schaltelement C wieder drucklos.

Abweichend von der Darstellung in Fig. 6 bzw. 6A kann bei dem vorliegenden beispielhaften Getriebeschema auch vorgesehen sein, dass der Abtrieb (5) des Fahrzeugs nicht durch das gleichzeitige Schließen der beiden Schaltelemente C und D am Getriebegehäuse festgesetzt wird, sondern durch zusätzliches Schließen des Schaltelementes A neben den bereits geschlossenen Schaltelementen B und D. Da genau die Schaltelement-Kombination "A+D" auch für den vom Fahrer gewünschten ersten Vorwärtsgang benötigt werden, muss das Getriebe (4) in diesem Fall im letzten Verfahrensschritt durch Öffnen des Schaltelements B auf diese Schaltelement-Kombination "A+D" umgeschaltet werden. Dadurch, dass ein Schaltelement weniger am Verfahren beteiligt ist und ein Befüllvorgang für ein Schaltelement weniger notwendig ist, kann ein Reaktionszeitgewinn erzielt werden.

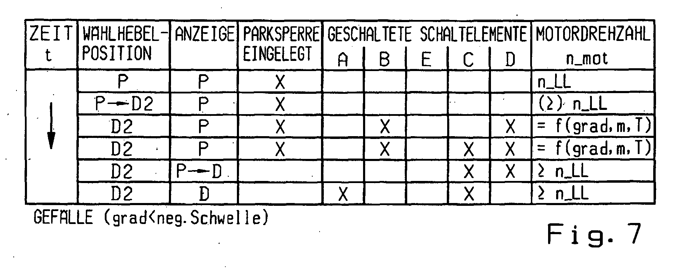

Der zuvor anhand der Figuren 6 und 6A für die Wählhebelschaltung "P → D1" eines in einem Gefälle mit formschlüssig eingelegter Parksperre stehenden Fahrzeugs beschriebene erfindungsgemäße Verfahrensablauf ist auch auf andere Wählhebelschaltungen sinngemäß übertragbar. So zeigt Fig. 7 - in Anlehnung an Fig. 3 - ein zweites beispielhaftes Zustandsdiagramm des erfindungsgemäßen Verfahrens, nunmehr für eine über den Wählhebel vorgegebene Fahrerwunschvorgabe "P → D2", wobei das Fahrzeug zum Zeitpunkt dieser Wählhebelbetätigung durch den Fahrer wie in Fig. 6 in Vorwärtsfahrtrichtung gesehen in einem hinreichend steilen Fahrbahn-Gefälle mit aktivierter bzw. eingelegter Parksperre (8) steht. Die Wählhebelstellung "P" bezeichnet wieder die Parkstellung des Getriebes (4) bzw. des Fahrzeugs, die Wählhebelstellung "D2" einen Vorwärtsfahrt mit Anfahren im zweiten Gang. Aus Fig. 7 ist sofort ersichtlich, dass die ersten fünf Zeilen des Zustandsdiagramms bis auf die Bezeichnung der Wählhebelposition identisch sind mit den ersten fünf Zeilen des Zustandsdiagramms gemäß Fig. 6, weshalb auf deren nochmalige Beschreibung an dieser Stelle verzichtet werden kann.

Die sechste Zeile des Zustandsdiagramms gemäß Fig. 7 beschreibt wieder den letzten Verfahrensschritt der erfindungsgemäßen Funktion, nachdem die Parksperre (8) ausgelegt wurde. Im Unterschied zu Fig. 6 wird nunmehr das Getriebe (4) schaltelementseitig in die normale Schaltstellung des zweiten Vorwärtsgangs überführt. Entsprechend der Schaltlogik gemäß Fig. 1 sind im zweiten Vorwärtsgang die Schaltelemente A und C geschlossen, folglich wird in dem letzten Verfahrensschritt gemäß Fig. 7 nunmehr das Schaltelement D abgeschaltet, wohingegen die beiden anderen zuvor geschalteten Schaltelemente A und C angesteuert bleiben. Entsprechend ändert sich die den Schaltstatus des Schaltelementes D betreffende Zustandsinformation.

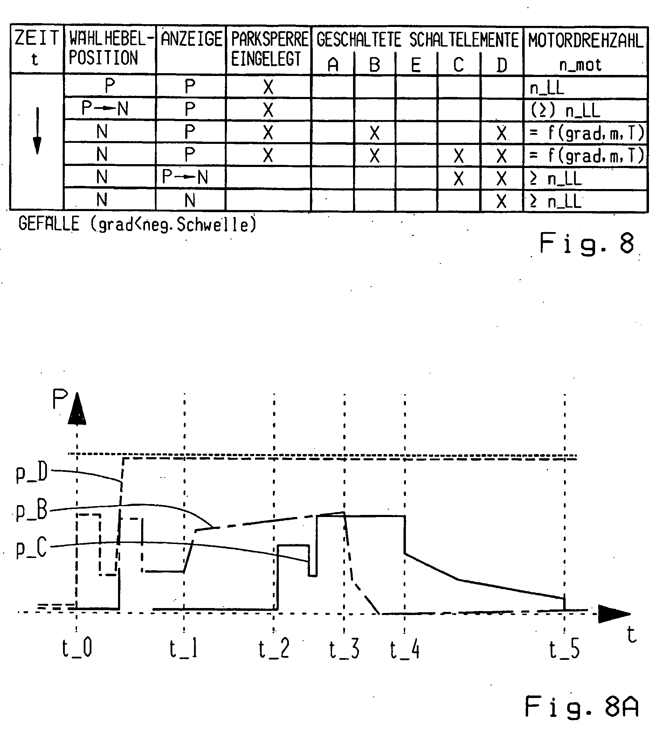

In Anlehnung an die Figuren 4 und 4A wird im Folgenden anhand der Figuren 8 und 8B ein Schaltablauf gemäß des erfindungsgemäßen Verfahrens beschrieben, wenn das Fahrzeug in Vorwärtsfahrtrichtung gesehen in einem hinreichend steilen Gefälle steht und der Fahrer des Fahrzeugs über den Wählhebel einen Fahrerwunsch "P → N" zum Verlassen der Parkposition "P" und Einlegen des kraftschlussfreien Neutralbereichs "N" des Getriebes (4) vorgibt. In Fig. 8 ist das entsprechende Zustandsdiagramm mit dem zeitlichen Ablauf der einzelnen erfindungsgemäßen Verfahrensschritte dargestellt, in Fig. 8A ein zu diesem Zustandsdiagramm korrespondierender zeitlicher Verlauf der Schaltelement-Drücke der verfahrensbeteiligten Schaltelemente.

Aus Fig. 8 ist sofort ersichtlich, dass die ersten vier Zeilen des Zustandsdiagramms bis auf die Bezeichnung der Wählhebelposition identisch sind mit den ersten vier Zeilen des Zustandsdiagramms gemäß Fig. 6, weshalb auf deren nochmalige Beschreibung an dieser Stelle verzichtet werden kann. Auch die korrespondierenden Schaltdruckverläufe p_D, p_B, p_C der Schaltelemente D, B und C gemäß Fig. 8A sind bis zum Zeitpunkt t_3 identisch zu den Schaltdruckverläufe p_D, p_B, p_C gemäß Fig. 6A. Da der Fahrer gemäß Fig. 8 die Neutralstellung "N" als Fahrerwunsch vorgegeben hat, ist im Unterschied zu Fig. 6A das Schaltelement A nunmehr nicht verfahrensbeteiligt. Folglich ist in Fig. 8A kurz vor dem Zeitpunkt t_3 auch keine Schnellfüllung für dieses Schaltelement A eingetragen.

Die fünfte Zeile des Zustandsdiagramms gemäß Fig. 8 beschreibt wieder den Verfahrensschritt der erfindungsgemäßen Funktion, in dem der Formschluss der Parksperre gelöst wird, nachdem das Sperrelement der Parksperre hinreichend weit entspannt ist durch das Zuschalten einer Schaltelement-Kombination "B+D", die ein Verdrehen des Antriebstrangs entgegen seiner Verspannungsrichtung zur Folge hat, und nachdem der Abtrieb (5) des Fahrzeugs über eine Schaltelement-Kombination "C+D" reibschlüssig arretiert ist. Das zur fünften Zeile des Zustandsdiagramms gemäß Fig. 8 korrespondierende Zeitfenster in Fig. 8A ist der Zeitbereich zwischen den Zeitpunkten t_3 und t_4. Entsprechend der Fahrerwunschvorgabe "N" wird nun das zur Entspannung des Antriebs (5) des Fahrzeugs bzw. zur Entspannung des formschlüssig eingerasteten Sperrelementes der Parksperre (8) zuvor zugeschaltete Schaltelement B wieder abgeschaltet. Im Prinzip ist es unerheblich, ob die Parksperre innerhalb dieses Verfahrensschrittes zeitlich gesehen vor, während oder nach dem Abschalten des Schaltelementes B mechanisch ausgelegt wird, da das Schaltelement B an dem reibschlüssigen Arretieren des Abtriebs (5) des Fahrzeugs am Getriebegehäuse nicht beteiligt ist. In dem vorliegenden Ausführungsbeispiel gemäß Fig. 8A wird das Schaltelement B beginnend mit dem Zeitpunkt t_3 abgeschaltet (Druckverlauf p_B), beispielhaft über eine zweistufige Druckabbaurampe mit steilem Anfangsgradient. Während des Auslegens der Parksperre (8) verbleiben die Schaltelemente D und C (Druckverläufe p_D und p_C) geschaltet auf ihrem zum Zeitpunkt t_3 anliegenden jeweiligen Druckniveau, wodurch das durch die Hangabtriebskraft des Fahrzeugs auf die Abtriebswelle (10) des Getriebes (4) wirkende Drehmoment über des Reibschluß dieser beiden Schaltelemente D, C am Getriebegehäuse abgestützt wird.

Die sechste Zeile des Zustandsdiagramms gemäß Fig. 8 beschreibt wieder den letzten Verfahrensschritt der erfindungsgemäßen Funktion, in dem das Schaltelement C, mittels dessen die Abtriebswelle (10) des Getriebe (4) zuvor im entlasteten bzw. teilentlasteten Zustand der vorschlüssig eingelegten Parksperre (8) blockiert wurde, gesteuert oder geregelt geöffnet wird. Entsprechend der Fahrerwunschvorgabe ist das Getriebe (4) nunmehr kraftschlussfrei, wobei hier beispielhaft das Schaltelement D auf seinem Verriegelungsdruck angesteuert verbleibt, um die Reaktionszeit bei einem späteren Gangeinlegen zur verkürzen. Der in Fig. 8A dargestellte beispielhafte Druckabbau (Druckverlauf p_C) des Schaltelementes C ab dem Zeitpunkt t_4 entspricht dem Druckabbau gemäß Fig. 6A.

In Anlehnung an die Figuren 5 und 5A wird anhand der Figuren 9 und 9B nun ein Schaltablauf gemäß des erfindungsgemäßen Verfahrens beschrieben, wenn das Fahrzeug in Vorwärtsfahrtrichtung gesehen in einem hinreichend steilen Gefälle steht und der Fahrer des Fahrzeugs über den Wählhebel einen Fahrerwunsch "P → R" zum Verlassen der Parkposition "P" und Einlegen des Rückwärtsgangs "R" des Getriebes (4) vorgibt. In Fig. 9 ist das entsprechende Zustandsdiagramm mit dem zeitlichen Ablauf der einzelnen erfindungsgemäßen Verfahrensschritte dargestellt, in Fig. 9A ein zu diesem Zustandsdiagramm korrespondierender zeitlicher Verlauf der Schaltelement-Drücke der verfahrensbeteiligten Schaltelemente.

Aus Fig. 9 ist sofort ersichtlich, dass die ersten vier Zeilen des Zustandsdiagramms bis auf die Bezeichnung der Wählhebelposition identisch sind mit den ersten vier Zeilen des Zustandsdiagramms gemäß Fig. 6, weshalb auf deren nochmalige Beschreibung an dieser Stelle verzichtet werden kann. Auch die korrespondierenden Schaltdruckverläufe p_D, p_B, p_C der Schaltelemente D, B und C gemäß Fig. 9A sind bis zum Zeitpunkt t_3 identisch zu den Schaltdruckverläufe p_D, p_B, p_C gemäß Fig. 6A.

Abweichend von der Darstellung in Fig. 9 kann in einer anderen Ausgestaltung des erfindungsgemäßen Verfahrens der in Zeile vier dargstellte Verfahrensschritt, in dem der Abtrieb des Fahrzeug über einen Reibschluß von Schaltelementen des Getriebes am Getriebegehäuse festgesetzt ist, auch komplett entfallen, weil die bereits zuvor zum Abbau der Verspannung am formschlüssig eingelegten Sperrelement der Parksperre (8) zugeschalteten Schaltelemente B und D im vorliegenden Fall ermöglichen, dass das Fahrzeug in dem vom Fahrer vorgegebenen Gang "R" anfahrbar ist.

Die fünfte Zeile des Zustandsdiagramms gemäß Fig. 9 beschreibt wieder den Verfahrensschritt der erfindungsgemäßen Funktion, in dem der Formschluss der Parksperre gelöst wird, nachdem das Sperrelement der Parksperre hinreichend weit entspannt ist durch das Zuschalten einer Schaltelement-Kombination "B+D", die ein Verdrehen des Antriebstrangs entgegen seiner Verspannungsrichtung zur Folge hat, und nachdem der Abtrieb (5) des Fahrzeugs über eine Schaltelement-Kombination "C+D" reibschlüssig am Getriebegehäuse festgesetzt ist. Das zur fünften Zeile des Zustandsdiagramms gemäß Fig. 9 korrespondierende Zeitfenster in Fig. 9A ist der Zeitbereich zwischen den Zeitpunkten t_3 und t_4. Im Unterschied zum Verfahrensablauf gemäß Fig. 6 bzw. Fig. 6A ist nunmehr kein Wechsel der Schaltelement-Kombination mehr notwendig, damit am Ende die Abtriebswelle (10) des Getriebes (4) in die der Fahrerwunschvorgabe "R" entsprechenden Drehrichtung drehbar ist; die zum Entspannen des Abtriebs (5) bzw. der Parksperre zuvor bereits angesteuerten Schaltelemente B und D sind diejenigen Schaltelemente, die auf für die Realisierung des vom Fahrer gewünschten Zielgangs "R" benötigt werden. Während der Formschluss der Parksperre (8) in dem genannten Verfahrensschritt zwischen den Zeitpunkten t_3 und t_4 gelöst wird, wird der Schaltdruck p_B des Schaltelementes B auf ein Verriegelungsdruckniveau angehoben, wobei das durch die Hangabtriebskraft des Fahrzeugs auf die Abtriebswelle (10) des Getriebes (4) wirkende Drehmoment nur durch die Schaltelemente C und D (Druckverläufe p_C, p_D) am Getriebegehäuse abgestützt wird. Bei der Zustandsinformation des Schaltelementes B ist mit der Klammer angedeutet, dass dieses Schaltelement B zum reibschlüssigen Festsetzen des Abtriebs (5) nicht benötigt wird und deshalb nicht notwendigerweise geschlossen sein muss.

Die sechste Zeile des Zustandsdiagramms gemäß Fig. 9 beschreibt wieder den letzten Verfahrensschritt der erfindungsgemäßen Funktion, in dem das Schaltelement C, mittels dessen die Abtriebswelle (10) des Getriebe (4) zuvor im entlasteten bzw. teilentlasteten Zustand der vorschlüssig eingelegten Parksperre (8) blockiert wurde, nunmehr gesteuert oder geregelt geöffnet wird. Die beiden für den Rückwärtsgang benötigten Schaltelemente C und D befinden sich hier beispielhaft schon zum Zeitpunkt t_4 auf deren maximalen Druckniveau (Verriegelungsdruck). Beginnend ab dem Zeitpunkt t_4 wird der Schaltdruck p_C des Schaltelementes C über einen definierten Algorithmus gesteuert oder geregelt abgebaut, hier wieder beispielhaft über ein zweistufige Druckabbaurampe, die nach einem schlagartigen negativen Drucksprung startet. Je nach Applikation dieses Druckabbaus am Schaltelement C wird das Fahrzeug mehr oder weniger kurz nach dem Zeitpunkt t_4 in die gewünschte Fahrrichtung anfahren können. Zum Zeitpunkt t_5 ist das Schaltelement C wieder drucklos.

### Bezugszeichen

- 1: Antriebstrang
- 2: Antriebsmaschine
- 3: Anfahrelement
- 4: Getriebe
- 5: Abtrieb
- 6: erster Planetensatz des Getriebes
- 7: zweiter Planetensatz des Getriebes
- 8: Parksperre
- 9A, 9B: Antriebsräder des Fahrzeugs
- 10: Abtriebswelle des Getriebe

- A, B, E, C, D: Schaltelemente

- D1, D2, N, P, R: Wählhebeistellungen

- grad: Fahrbahnneigung
- n_LL: Leerlaufdrehzahl der Antriebsmaschine
- n_mot: Drehzahl der Antriebsmaschine
- m: Masse
- p: Druck
- p_A, p_B, p_C, p_D: Druckverläufe der Schaltelemente A, B, C, D
- t: Zeit
- t_0, t_1, t_2, t_3, t_4: Zeitpunkte
- T: Temperatur

## Patentansprüche

1. Verfahren zur Steuerung eines Fahrzeuggetriebes (4) mit mehrere reibschlüssigen Schaltelementen (A bis E) und mit einer Parksperre (8) zum formschlüssigen Festsetzen eines Abtriebs (5) eines Antriebstranges (1), welche bei einer entsprechenden Fahrerwunschvorgabe aktiviert ist, wobei der Abtrieb (5) bei aktivierter Parksperre (8) zusätzlich durch Zuschaltung von wenigstens einem reibschlüssigen Schaltelement arretierbar ist, wobei diese reibschlüssige Arretierung nach dem Deaktivieren der Parksperre (8) abgeschaltet wird, **dadurch gekennzeichnet,**
**dass,** wenn eine Fahrerwunschvorgabe zum Deaktivieren der Parksperre (8) erkannt ist, während eine aktuelle Fahrbahnneigung (grad) größer als ein vorgegebener erster positiver Schwellwert oder kleiner als ein vorgegebener erster negativer Schwellwert ist,
in einem ersten Verfahrensschritt in Abhängigkeit vom Vorzeichen der aktuellen Fahrbahnneigung (grad) Schaltelemente (A, D bzw. B, D) in derartiger Kombination derart in Schlupf gebracht werden, dass sich der Abtrieb (5) entgegen seiner bei aktivierter Parksperre (8) wirkenden Verspannungsrichtung verdreht, bis eine Verspannung am formschlüssig eingelegten Sperrelement der Parksperre zumindest teilweise abgebaut ist,
in einem anschließenden zweiten Verfahrensschritt wenigstens ein zum reibschlüssigen Arretieren des Abtriebs (5) zuschaltbares Schaltelement (C bzw. A oder B) zusätzlich zuschaltbar ist,
in einem anschließenden dritten Verfahrensschritt der Formschluss der Parksperre (8) gelöst wird, und
in einem anschließenden vierten Verfahrensschritt wenigstens ein zum reibschlüssigen Arretieren des Abtriebs (5) geschaltetes Schaltelement (C bzw. A oder B) wieder gesteuert oder geregelt abgeschaltet wird, so dass der Abtrieb (5) entsprechend der Fahrervwnschvorgabe drehbar ist.

2. Verfahren nach Anspruch 1, **dadurch gekennzeichnet, dass** der zweite und vierte Verfahrensschritt nicht ausgeführt und im Verfahrensablauf übersprungen werden, wenn der Abtrieb (5) durch die Zuschaltung der im ersten Verfahrensschritt angesteuerten Schaltelemente (A, D bzw. B, D) entsprechend der Fahrerwunschvorgabe drehbar ist.

3. Verfahren nach Anspruch 1 oder 2, **dadurch gekennzeichnet, dass,** wenn die aktuelle Fahrbahnneigung (grad) größer als der vordefinierter positive Schwellwert ist, in dem ersten Verfahrensschritt Schaltelemente (A, D) angesteuert werden, über die ein Vorwärtsgang des Fahrzeuggetriebes (4) schaltbar ist.

4. Verfahren nach Anspruch 3, **dadurch gekennzeichnet, dass** der in dem ersten Verfahrensschritt eingelegte Vorwärtsgang der erste Vorwärtsgang des Fahrzeuggetriebes (4) ist.

5. Verfahren nach Anspruch 3, **dadurch gekennzeichnet, dass** der ein dem ersten Verfahrensschritt eingelegte Vorwärtsgang nicht der erste Vorwärtsgang des Fahrzeuggetriebes (4) ist.

6. Verfahren nach einem der Ansprüche 1 bis 5, **dadurch gekennzeichnet, dass**, wenn die aktuelle Fahrbahnneigung (grad) kleiner als der vordefinierter negative Schwellwert ist, in dem ersten Verfahrensschritt Schaltelemente (B, D) angesteuert werden, über die ein Rückwärtsgang des Fahrzeuggetriebes (4) schaltbar ist.

7. Verfahren nach einem der Ansprüche 1 bis 6, **dadurch gekennzeichnet, dass** zumindest eines der in dem ersten Verfahrensschritt angesteuerten Schaltelemente (A, D bzw. B, D) in Abhängigkeit von der aktuellen Fahrbahnneigung (grad) und/oder einer Fahrzeugmasse (m) und/oder einer Getriebetemperatur (T) bzw. einer die Getriebetemperatur (T) repräsentierenden Temperatur gesteuert oder geregelt wird.

8. Verfahren nach einem der Ansprüche 1 bis 7, **dadurch gekennzeichnet, dass** das in dem zweiten Verfahrensschritt zum Arretieren des Abtriebs (5) angesteuerte Schaltelement (C bzw. A oder B) in Abhängigkeit von der aktuellen Fahrbahnneigung (grad) und/oder einer Fahrzeugmasse (m) und/oder einer Getriebetemperatur (T) bzw. einer die Getriebetemperatur (T) repräsentierenden Temperatur gesteuert oder geregelt wird.

9. Verfahren nach einem der Ansprüche 1 bis 8, **dadurch gekennzeichnet, dass** das in dem zweiten Verfahrensschritt zum Arretieren des Abtriebs (5) zuschaltbare Schaltelement (C bzw. A oder B) auch zur Darstellung eines Gangs bzw. einer Übersetzung in dem Fahrzeuggetriebe (4) schaltbar ist.

10. Verfahren nach einem der Ansprüche 1 bis 9, **dadurch gekennzeichnet, dass**, wenn die bei aktivierter Parksperre (8) wirkende Verspannungsrichtung des Abtriebs (5) unterschiedlich ist von einer der Fahrerwunschvorgabe entsprechenden Drehrichtung des Abtriebs (5), ein zum Anfahren des Fahrzeugs entsprechend der Fahrerwunschvorgabe benötigtes Schaltelement (A bzw. B) beginnend im zweiten Verfahrensschritt angesteuert wird.

11. Verfahren nach einem der Ansprüche 1 bis 9, **dadurch gekennzeichnet, dass,** wenn die bei aktivierter Parksperre (8) wirkende Verspannungsrichtung des Abtriebs (5) unterschiedlich ist von einer der Fahrerwunschvorgabe entsprechenden Drehrichtung des Abtriebs (5), ein zum Anfahren des Fahrzeugs entsprechend der Fahrerwunschvorgabe benötigtes Schaltelement (A bzw. B) beginnend im dritten Verfahrensschritt angesteuert wird.

12. Verfahren nach einem der Ansprüche 1 bis 11, **dadurch gekennzeichnet, dass**, wenn die bei aktivierter Parksperre (8) wirkende Verspannungsrichtung des Abtriebs (5) unterschiedlich ist von einer der Fahrerwunschvorgabe entsprechenden Drehrichtung des Abtriebs (5), das in dem ersten Verfahrensschritt zugeschaltete Schaltelement (A bzw. B), welches in dem zweiten Verfahrensschritt zum Arretieren des Abtriebs (5) nicht benötigt wird, in dem dritten Verfahrensschritt wieder abgeschaltet wird.

13. Verfahren nach einem der Ansprüche 1 bis 12, **dadurch gekennzeichnet, dass** eine Übertragungsfähigkeit der Schaltelemente (C, D bzw. A, B, D), die in dem dritten Verfahrensschritt zum Feststellen des Abtriebs (5) zugeschaltet sind, unterschiedlich hoch eingestellt ist, wobei die Übertragungsfähigkeit des Schaltelementes (C bzw. A oder B), welches nach dem Deaktivieren der Parksperre (8) abgeschaltet wird, geringer ist als die Übertragungsfähigkeit des Schaltelementes (D), welches bei deaktivierter Parksperre (8) in zugeschaltetem Zustand verbleibt.

14. Verfahren nach einem der Ansprüche 1 bis 13, **dadurch gekennzeichnet, dass** in dem vierten Verfahrensschritt eine Übertragungsfähigkeit mindestens eines der zur reibschlüssigen Arretierung des Abtriebs (5) geschalteten Schaltelemente (C bzw. A oder B) derart verringert wird, dass ein Vorspannmoment des Abtriebes (5) stetig abgebaut wird.

15. Verfahren nach einem der Ansprüche 1 bis 14, **dadurch gekennzeichnet, dass**, wenn die aktuelle Fahrbahnneigung (grad) größer als der vorgegebene erste positive Schwellwert und die Fahrerwunschvorgabe ein Vorwärtsfahrbereich ist, in dem vierten Verfahrensschritt kein Gangwechsel vorgenommen wird.

16. Verfahren nach einem der Ansprüche 1 bis 14, **dadurch gekennzeichnet, dass,** wenn die aktuelle Fahrbahnneigung (grad) größer als der vorgegebene erste positive Schwellwert und die Fahrerwunschvorgabe ein Vorwärtsfahrbereich ist, in dem vierten Verfahrensschritt in einen anderen Vorwärtsgang des Fahrzeuggetriebes (4) geschaltet wird.

17. Verfahren nach einem der Ansprüche 1 bis 14, **dadurch gekennzeichnet, dass,** wenn die aktuelle Fahrbahnneigung (grad) größer als der vorgegebene erste positive Schwellwert und die Fahrerwunschvorgabe ein Rückwärtsfahrbereich ist, in dem vierten Verfahrensschritt in einen Rückwärtsgang des Fahrzeuggetriebes (4) geschaltet wird.

18. Verfahren nach einem der Ansprüche 1 bis 17, **dadurch gekennzeichnet, dass,** wenn die aktuelle Fahrbahnneigung (grad) kleiner als der vorgegebene erste negative Schwellwert und die Fahrerwunschvorgabe ein Vorwärtsfahrbereich ist, in dem vierten Verfahrensschritt in einen Vorwärtsgang des Fahrzeuggetriebes (4) geschaltet wird.

19. Verfahren nach Anspruch 18, **dadurch gekennzeichnet, dass** der in dem vierten Verfahrensschritt eingelegte Vorwärtsgang der erste Vorwärtsgang des Fahrzeuggetriebes (4) ist.

20. Verfahren nach Anspruch 18, **dadurch gekennzeichnet, dass** der in dem vierten Verfahrensschritt eingelegte Vorwärtsgang nicht der erste Vorwärtsgang des Fahrzeuggetriebes (4) ist.

21. Verfahren nach einem der Anspruche 1 bis 20 **dadurch gekennzeichnet, dass,** wenn die aktuelle Fahrbahnneigung (grad) kleiner als der vorgegebene erste negative Schwellwert und die Fahrerwunschvorgabe ein Rückwärtsfahrbereich ist, in dem vierten Verfahrensschritt kein Gangwechsel vorgenommen wird.

22. Verfahren nach einem der Ansprüche 1 bis 21, **dadurch gekennzeichnet, dass** in dem ersten und/oder zweiten Verfahrensschritt eine Anhebung der Drehzahl (n_mot) einer Antriebsmaschine (2) des Antriebstrangs (1) auf einen Wert größer einer Leerlaufdrehzahl (n_LL) der Antriebsmaschine (2) und/oder eine Anhebung des Drehmomentes der Antriebsmaschine (2) des Antriebstrangs (1) auf einen Wert größer eines Leerlaufdrehmomentes der Antriebsmaschine (2) vorgesehen ist.

23. Verfahren nach Anspruch 22, **dadurch gekennzeichnet, dass** die Anhebung der Drehzahl (n_mot) und/oder des Drehmomentes der Antriebsmaschine (2) in Abhängigkeit der aktuellen Fahrbahnneigung (grad) und/oder der Fahrzeugmasse (m) und/oder der Getriebetemperatur T bzw. der die Getriebetemperatur (T) repräsentierenden Temperatur und/oder von Parametern des Anfahrelementes (3) bzw. Drehmomentwandlers des Getriebes (4) erfolgt.

24. Verfahren nach einem der Ansprüche 1 bis 23, **dadurch gekennzeichnet, dass** das Verfahren vorzeitig abgebrochen und die Parksperre (8) sofort ausgelegt und sofern erforderlich, gleichzeitig in den der Fahrerwunschvorgabe entsprechenden Gang geschaltet wird, wenn eine Ausrückkraft der Parksperre (8) größer ist als ein vordefinierter Wert.

25. Verfahren nach einem der Ansprüche 1 bis 24, **dadurch gekennzeichnet, dass** das Verfahren nach dem ersten Verfahrensschritt nach dem Erreichen der maximal möglichen Entlastung der Parksperre (8) vorzeitig abgebrochen und die Parksperre (8) sofort ausgelegt und - sofern erforderlich - gleichzeitig in den der Fahrerwunschvorgabe entsprechenden Gang geschaltet wird, wenn die aktuelle Fahrbahnneigung (grad) größer als ein zweiter positiver Schwellwert oder kleiner als ein zweiter negativer Schwellwert ist, wobei der zweite positive Schwellwert der aktuellen Fahrbahnneigung (grad) größer ist als der erste positive Schwellwert der aktuellen Fahrbahnneigung (grad), und wobei der zweite negative Schwellwert der aktuellen Fahrbahnneigung (grad) kleiner ist als der erste negative Schwellwert der aktuellen Fahrbahnneigung (grad).

26. Verfahren nach einem der Ansprüche 1 bis 24, **dadurch gekennzeichnet, dass** das Verfahren vor dem ersten Verfahrensschritt abgebrochen und die Parksperre (8) sofort ausgelegt wird, wenn die aktuelle Fahrbahnneigung (grad) größer als ein zweiter positiver Schwellwert oder kleiner als ein zweiter negativer Schwellwert ist, wobei der zweite positive Schwellwert der aktuellen Fahrbahnneigung (grad) größer ist als der erste positive Schwellwert der aktuellen Fahrbahnneigung (grad), und wobei der zweite negative Schwellwert der aktuellen Fahrbahnneigung (grad) kleiner ist als der erste negative Schwellwert der aktuellen Fahrbahnneigung (grad).

27. Verfahren nach einem der Ansprüche 1 bis 26, **dadurch gekennzeichnet, dass** der erste und/oder zweite positive und/oder der erste und/oder zweite negative Schwellwert der aktuellen Fahrbahnneigung (grad) als fester Wert vordefiniert ist.

28. Verfahren nach einem der Ansprüche 1 bis 26, **dadurch gekennzeichnet, dass** der erste und/oder zweite positive und/oder der erste und/oder zweite negative Schwellwert der aktuellen Fahrbahnneigung (grad) in Abhängigkeit der Fahrzeugmasse (m) vorgegeben oder adaptiv ermittelt wird.

29. Verfahren nach einem der Ansprüche 1 bis 28, **dadurch gekennzeichnet, dass** die aktuelle Fahrbahnneigung (grad) mittels eines fahrzeugfesten Neigungssensors ermittelt wird.

30. Verfahren nach einem der Ansprüche 1 bis 28, **dadurch gekennzeichnet, dass** die aktuelle Fahrbahnneigung (grad) mittels eines landkartengestützten Navigationssystems des Fahrzeugs ermittelt wird.

31. Verfahren nach einem der Ansprüche 1 bis 30, **dadurch gekennzeichnet, dass** die Fahrzeugmasse (m) als ein vordefinierter Wert fest vorgegeben ist.

32. Verfahren nach einem der Ansprüche 1 bis 30, **dadurch gekennzeichnet, dass** die Fahrzeugmasse (m) ein adaptierbarer Wert ist, der einer aktuellen Fahrzeugmasse annäherbar ist, unter Berücksichtigung einer oder mehrerer der folgenden Funktionen bzw. Parameter:
• Vergleich einer theoretischen Fahrzeugbeschleunigung mit einer vor dem letzten Aktivieren der Parksperre (8) ermittelten tatsächlichen Fahrzeugbeschleunigung;
• Federrate einer Fahrwerksfeder in Verbindung mit aktuellen rad- oder achsindividuelle Einfederwegen am Fahrwerk des Fahrzeugs;
• radindividuelle Druckwerte einer Luftfederung des Fahrzeugs;
• Signal einer Niveauregulierung einer Achse des Fahrzeugs;
• Berücksichtigung einer möglichen Anhängermasse als ein permanent fest vordefinierter Wert;
• Berücksichtigung einer Anhängermasse nur dann, wenn ein Anhängerbetriebs erkannt ist.

33. Fahrzeuggetriebe (4) mit mehreren Schaltelementen (A bis E) zur Darstellung mehrerer Übersetzungen, mit einer Parksperre (8) zum formschlüssigen Feststellen eines Abtriebs (5) eines Antriebsstranges (1), welche über eine Steuereinrichtung in Abhängigkeit einer Fahrerwunschvorgabe aktivierbar ist, wobei wenigstens ein reibschlüssiges Schaltelement vorgesehen ist, über welches der Abtrieb (5) bei aktivierter Parksperre (8) zusätzlich reibschlüssig arretierbar ist, sowie mit einer Steuerung zum Deaktivieren der Parksperre (8) und zum Ansteuern der Schaltelemente (A bis E),
**dadurch gekennzeichnet**
**dass,** durch die Steuerung wenn eine Fahrerwunschvorgabe zum Deaktivieren der Parksperre (8) erkannt ist, während eine aktuelle Fahrbahnneigung (grad) größer als ein vorgegebener erster positiver Schwellwert oder kleiner als ein vorgegebener erster negativer Schwellwert ist,
in einem ersten Verfahrensschritt zum Deaktivieren der Parksperre (8) in Abhängigkeit vom Vorzeichen der aktuellen Fahrbahnneigung (grad) Schaltelemente (A, D bzw. B, D) in derartiger Kombination derart in Schlupf gebracht werden, dass sich der Abtrieb (5) entgegen seiner bei aktivierter Parksperre (8) wirkenden Verspannungsrichtung verdreht, bis eine Verspannung am formschlüssigen Sperrelement der Parksperre zumindest teilweise abgebaut ist,
in einem anschließenden zweiten Verfahrensschritt zum Deaktivieren der Parksperre (8) wenigstens ein zum Arretieren des Abtriebs (5) zuschaltbares Schaltelement (C bzw. A oder B) zusätzlich zuschaltbar ist,
in einem anschließenden dritten Verfahrensschritt der Steuerung zum Deaktivieren der Parksperre (8) der Formschluss der Parksperre (8) gelöst wird, und in einem anschließenden vierten Verfahrensschritt wenigstens ein zum reibschlüssigen Arretieren des Abtriebs (5) geschaltetes Schaltelement (C bzw. A oder B) wieder gesteuert oder geregelt abgeschaltet wird, so dass der Abtrieb (5) entsprechend der Fahrerwunschvorgabe drehbar ist.

34. Fahrzeuggetriebe nach Anspruch 33, **dadurch gekennzeichnet, dass** durch die Steuerung das im zweiten Verfahrensschritt zum Festsetzen des Abtriebs (5) vorgesehene reibschlüssige Schaltelement (C bzw. A oder B) zur Darstellung einer Übersetzung in dem Automatgetriebe (4) vorgesehen ist und zum Feststellen des Abtriebs (5) ein weiteres Schaltelement (D) zugeschaltet ist.

35. Fahrzeuggetriebe nach einem der Ansprüche 1 bis 34, **dadurch gekennzeichnet, dass** die Parksperre (8) mit einem Parksperrenrad und einer Sperrklinke ausgebildet ist, wobei die Sperrklinke in eine Verzahnung des Parksperrenrades formschlüssig eingreifen kann.

36. Fahrzeuggetriebe nach einem der Ansprüche bis 35, **dadurch gekennzeichnet, dass** die Parksperre (8) innerhalb eines Getriebegehäuse des Fahrzeuggetriebes (4) angeordnet ist, wobei ein Sperrelement der Parksperre (8) zum Festsetzen des Abtriebs (5) mit einer Abtriebswelle (10) des Fahrzeuggetriebes (4) in Wirkverbindung bringbar ist.

37. Fahrzeuggetriebe nach einem der Ansprüche bis 35, **dadurch gekennzeichnet, dass** die Parksperre (8) außerhalb eines Getriebegehäuse des Fahrzeuggetriebes (4) angeordnet ist, wobei ein Sperrelement der Parksperre (8) zum Festsetzen des Abtriebs (5) mit einer Abtriebswelle (10) des Fahrzeuggetriebes (4) in Wirkverbindung bringbar ist.

## Claims

1. Method for controlling a vehicle transmission (4) having a plurality of frictionally engaging shift elements (A to E) and having a parking brake (8) for locking an output (5) of a drivetrain (1) in a positively engaging fashion, which parking brake (8) is activated when there is a corresponding driver's request presetting, wherein when the parking brake (8) is activated, the output (5) can be additionally locked by activating at least one frictionally engaging shift element, wherein this frictionally engaging locking means is switched off after the parking brake (8) is deactivated, **characterized**
**in that**, if a driver's request presetting for deactivating the parking brake (8) is detected while a current inclination (grad) of the carriageway is greater than a predefined, first positive threshold value or smaller than a predefined first negative threshold value,
in a first method step, shift elements (A, D and B, D, respectively) are made to slip as a function of the sign of the current inclination (grad) of the carriageway being such a combination that the output (5) rotates counter to its tensioning direction which acts when the parking brake (8) is activated, and until tensioning is at least partially eliminated at the locking element, applied in a positively engaging fashion, of the parking brake,
in a subsequent second method step at least one shift element (C, A or B) which can be activated in order to lock the output (5) in a frictionally engaging fashion can be additionally activated,
in a subsequent third method step the positive engagement of the parking brake (8) is eliminated, and in a subsequent fourth method step at least one shift element (C, A or B) which is shifted in order to lock the output (5) in a frictionally engaging fashion is deactivated again under open-loop or closed-loop control, with the result that the output (5) can be rotated in accordance with the driver's request presetting.

2. Method according to Claim 1, **characterized in that** the second and fourth method steps are not carried out and are bypassed in the method sequence if the output (5) can be rotated by engaging the shift elements (A, D and B, D, respectively), actuated in the first method step, in accordance with the driver's request presetting.

3. Method according to Claim 1 or 2, **characterized in that**, if the current inclination (grad) of the carriageway is greater than the predefined positive threshold value, the shift elements (A, D), by means of which a forward gear speed of the vehicle transmission (4) can be shifted, are actuated in the first method step.

4. Method according to Claim 3, **characterized in that** the forward gear speed which is engaged in the first method step is the first forward gear speed of the vehicle transmission (4).

5. Method according to Claim 3, **characterized in that** the forward gear speed which is engaged in the first method step is not the first forward gear speed of the vehicle transmission (4).

6. Method according to one of Claims 1 to 5, **characterized in that**, if the current inclination (grad) of the carriageway is smaller than the predefined negative threshold value, shift elements (B, D), by means of which a reverse gear speed of the vehicle transmission (4) can be shifted, are actuated in the first method step.

7. Method according to one of Claims 1 to 6, **characterized in that** at least one of the shift elements (A, D and B, D, respectively) which are actuated in the first method step are subjected to open-loop or closed-loop control as a function of the current inclination (grad) of the carriageway and/or a vehicle mass (m) and/or a transmission temperature (T) or a temperature which represents the transmission temperature (T).

8. Method according to one of Claims 1 to 7, **characterized in that** the shift element (C, A or B), which is actuated in the second method step in order to lock the output (5), is subjected to open-loop or closed-loop control as a function of the current inclination (grad) of the carriageway and/or a vehicle mass (m) and/or a transmission temperature (T) or a temperature which represents the transmission temperature (T).

9. Method according to one of Claims 1 to 8, **characterized in that** the shift element (C, A or B), which can be activated in the second method step in order to lock the output (5), can also be shifted in order to implement a gear speed or a transmission ratio in the vehicle transmission (4).

10. Method according to one of Claims 1 to 9, **characterized in that**, if the tensioning direction of the output (5) which acts when the parking brake (8) is activated is different from a rotational direction of the output (5) which corresponds to the driver's request presetting, a shift element (A or B) which is required in order to start the vehicle in accordance with the driver's request presetting is actuated starting in the second method step.

11. Method according to one of Claims 1 to 9, **characterized in that**, if the tensioning direction of the output (5) which acts when the parking brake (8) is activated is different from a rotational direction of the output (5) which corresponds to the driver's request presetting, a shift element (A or B) which is required to start the vehicle in accordance with the driver's request presetting is actuated starting in the third method step.

12. Method according to one of Claims 1 to 11, **characterized in that**, if the tensioning direction of the output (5) which acts when the parking brake (8) is activated is different from a rotational direction of the output (5) which corresponds to the driver's request presetting, the shift element (A or B) which is activated in the first method step and which is not required to lock the output (5) in the second method step, is deactivated again in the third method step.

13. Method according to one of Claims 1 to 12, **characterized in that** a transmission capability of the shift elements (C, D and A, B, D, respectively) which are activated in the third method step in order to lock the drive (5) are set to different levels, wherein the transmission capability of the shift element (C, A or B), which is deactivated after the deactivation of the parking brake (8), is smaller than the transmission capability of the shift element (D) which remains in the activated state when the parking brake (8) is deactivated.

14. Method according to one of Claims 1 to 13, **characterized in that**, in the fourth method step, a transmission capability of at least one of the shift elements (C, A or B) which are shifted in order to bring about frictionally engaging locking of the output (5) is reduced in such a way that a pretensioning torque of the output (5) is reduced continuously.

15. Method according to one of Claims 1 to 14, **characterized in that**, if the current inclination (grad) of the carriageway is greater than the predefined first positive threshold value and the driver's request presetting is a forward travel range, no change in gear speed is performed in the fourth method step.

16. Method according to one of Claims 1 to 14, **characterized in that** if the current inclination (grad) of the carriageway is greater than the predefined first positive threshold value and the driver's request presetting is a forward travel range, in the fourth method step shifting into another forward gear speed of the vehicle transmission (4) is performed.

17. Method according to one of Claims 1 to 14, **characterized in that**, if the current inclination (grad) of the carriageway is greater than the predefined first positive threshold value and the driver's request presetting is a reverse travel range, in the fourth method step shifting into a reverse gear speed of the vehicle transmission (4) is performed.

18. Method according to one of Claims 1 to 17, **characterized in that**, if the current inclination (grad) of the carriageway is smaller than the predefined first negative threshold value and the driver's request presetting is a forward travel range, in the fourth method step shifting into a forward gear speed of the vehicle transmission (4) is performed.

19. Method according to Claim 18, **characterized in that**, the forward gear speed which is engaged in the fourth method step is the first forward gear speed of the vehicle transmission (4).

20. Method according to Claim 18, **characterized in that** the forward gear speed which is engaged in the fourth method step is not the first forward gear speed of the vehicle transmission (4).

21. Method according to one of Claims 1 to 20, **characterized in that**, if the current inclination (grad) of the carriageway is smaller than the predefined first negative threshold value and the driver's request presetting is a reverse travel range, in the fourth method step no gear change is performed.

22. Method according to one of Claims 1 to 21, **characterized in that**, in the first and/or second method steps, there is provision that the rotational speed (n_mot) of a drive machine (2) of the drivetrain (1) is raised to a value greater than an idling rotational speed (n_LL) of the drive machine (2) and/or the torque of the drive machine (2) of the drivetrain (1) is raised to a value greater than an idling torque of the drive machine (2).

23. Method according to Claim 22, **characterized in that** the raising of the rotational speed (n_mot) and/or of the torque of the drive machine (2) is carried out as a function of the current inclination (grad) of the carriageway and/or the vehicle mass (m) and/or the transmission temperature T or the temperature which represents the transmission temperature (T) and/or parameters of the starting element (3) or torque converter of the transmission (4).

24. Method according to one of Claims 1 to 23, **characterized in that** the method is aborted prematurely and the parking brake (8) is immediately disengaged and, if necessary, shifting into the gear speed corresponding to the driver's request presetting is simultaneously carried out if a disengagement force of the parking brake (8) is greater than a predefined value.

25. Method according to one of Claims 1 to 24, **characterized in that** after the first method step after the maximum possible release of the parking brake (8) from loading has been achieved the method is prematurely aborted and the parking brake (8) is immediately disengaged and, if necessary, shifting into the gear speed corresponding to the driver's request presetting is simultaneously carried out if the current inclination (grad) of the carriageway is greater than a second positive threshold value or smaller than a second negative threshold value, wherein the second positive threshold value of the current inclination (grad) of the carriageway is greater than the first positive threshold value of the current inclination (grad) of the carriageway, and wherein the second negative threshold value of the current inclination (grad) of the carriageway is smaller than the first negative threshold value of the current inclination (grad) of the carriageway.

26. Method according to one of Claims 1 to 24, **characterized in that** the method is aborted before the first method step and the parking brake (8) is disengaged immediately if the current inclination (grad) of the carriageway is greater than a second positive threshold value or smaller than a second negative threshold value, wherein the second positive threshold value of the current inclination (grad) of the carriageway is greater than the first positive threshold value of the current inclination (grad) of the carriageway, and wherein the second negative threshold value of the current inclination (grad) of the carriageway is smaller than the first negative threshold value of the current inclination (grad) of the carriageway.

27. Method according to one of Claims 1 to 26, **characterized in that** the first and/or second positive threshold values, and/or the first and/or second negative threshold values, of the current inclination (grad) of the carriageway are predefined as fixed values/is predefined as a fixed value.

28. Method according to one of Claims 1 to 26, **characterized in that** the first and/or second positive threshold values, and/or the first and/or second negative threshold values, of the current inclination (grad) of the carriageway are/is predefined or adaptively determined as a function of the vehicle mass (m).

29. Method according to one of Claims 1 to 28, **characterized in that** the current inclination (grad) of the carriageway is determined by means of an inclination sensor which is fixed to the vehicle.

30. Method according to one of Claims 1 to 28, **characterized in that** the current inclination (grad) of the carriageway is determined by means of a map-supporting navigation system of the vehicle.

31. Method according to one of Claims 1 to 30, **characterized in that** the vehicle mass (m) is fixedly predefined as a predefined value.

32. Method according to one of Claims 1 to 30, **characterized in that** the vehicle mass (m) is an adaptable value which can be adjusted to approach a current vehicle mass taking into account one or more of the following functions or parameters:
• comparison of a theoretical vehicle acceleration with an actual vehicle acceleration which is detected before the last activation of the parking brake (8);
• spring rate of a chassis spring in conjunction with current wheel-specific or axle-specific spring compression travel values at the chassis of the vehicle;
• wheel-specific pressure values of a spring suspension of the vehicle;
• signal of a ride level control system of an axle of the vehicle;
• taking into account of a possible trailer mass as a fixedly permanently predefined value; and
• taking into account of a trailer mass only if a trailer operating mode is detected.

33. Vehicle transmission (4) having a plurality of shift elements (A to E) for implementing a plurality of transmission ratios, having a parking brake (8) for locking, in a positively engaging fashion, an output (5) of a drivetrain (1), which parking brake (8) can be activated by means of a control device as a function of a driver's request presetting, wherein at least one frictionally engaging shift element is provided by means of which, when the parking brake (8) is activated, the output (5) can be additionally locked in a frictionally engaging fashion, and having a controller for deactivating the parking brake (8) and for actuating the shift elements (A to E), **characterized**
**in that** if a driver's request presetting for deactivating the parking brake (8) is detected by the controller while a current inclination (grad) of the carriageway is greater than a predefined, first positive threshold value or smaller than a predefined first negative threshold value,
in a first method step for deactivating the parking brake (8), shift elements (A, D and B, D, respectively) are made to slip as a function of the sign of the current inclination (grad) of the carriageway being such a combination that the output (5) rotates counter to its tensioning direction which acts when the parking brake (8) is activated, and until tensioning is at least partially eliminated at the locking element, applied in a positively engaging fashion, of the parking brake,
in a subsequent second method step for deactivating the parking brake (8) at least one shift element (C, A or B) which can be activated in order to lock the output (5) can be additionally activated,
in a subsequent third method step of the control process for deactivating the parking brake (8) the positive engagement of the parking brake (8) is eliminated, and
in a subsequent fourth method step at least one shift element (C, A or B) which is shifted in order to lock the output (5) in a frictionally engaging fashion is deactivated again under open-loop or closed-loop control, with the result that the output (5) can be rotated in accordance with the driver's request presetting.

34. Vehicle transmission according to Claim 33, **characterized in that** the frictionally engaging shift element (C, A or B) which is provided in the second method step for locking the output (5) is provided by the controller for implementing a transmission ratio in the automatic transmission (4), and a further shift element (D) is activated for locking the output (5).

35. Vehicle transmission according to one of Claims 1 to 34, **characterized in that** the parking brake (8) is embodied with a parking brake wheel and a ratchet, wherein the ratchet can engage in a positively engaging fashion in a toothing of the parking brake wheel.

36. Vehicle transmission according to one of Claims 1 to 35, **characterized in that** the parking brake (8) is arranged inside a transmission housing of the vehicle transmission (4), wherein a locking element of the parking brake (8) can be operatively connected to an output shaft (10) of the vehicle transmission (4) in order to lock the output (5).

37. Vehicle transmission according to one of Claims 1 to 35, **characterized in that** the parking brake (8) is arranged outside a transmission housing of the vehicle transmission (4), wherein a locking element of the parking brake (8) can be operatively connected to an output shaft (10) of the vehicle transmission (4) in order to lock the output (5).

## Revendications

1. Procédé de commande d'une transmission de véhicule (4) comprenant plusieurs éléments de commutation à engagement par friction (A à E) et un verrouillage de stationnement (8) pour la fixation par engagement positif d'une prise de force (5) d'une chaîne cinématique (1), qui est activée dans le cas d'un souhait prédéfini correspondant du conducteur, la prise de force (5), lorsque le verrouillage de stationnement (8) est activé, pouvant en outre être bloquée par activation d'au moins un élément de commutation à engagement par friction, ce blocage par engagement par friction étant désengagé après la désactivation du verrouillage de stationnement (8), **caractérisé en ce que** lorsqu'un souhait prédéfini du conducteur de désactivation du verrouillage de stationnement (8) est détecté, tandis qu'une pente de la chaussée actuelle (en degrés) est supérieure à une première valeur seuil prédéfinie positive ou inférieure à une première valeur seuil prédéfinie négative,
dans une première étape de procédé, en fonction du signe de la pente de la chaussée actuelle (en degrés), des éléments de commutation (A, D respectivement B, D) sont amenés en mode de glissement dans une combinaison telle que la prise de force (5) tourne à l'encontre de sa direction de serrage qui est effective lorsque le verrouillage de stationnement (8) est activé, jusqu'à ce qu'un serrage du verrouillage de stationnement au niveau de l'élément de verrouillage enclenché par engagement positif soit au moins en partie réduit,
dans une deuxième étape de procédé suivante, au moins un élément de commutation (C respectivement A ou B) pouvant être activé en vue du blocage par engagement par friction de la prise de force (5) peut en outre être activé,
dans une troisième étape de procédé suivante, l'engagement positif du verrouillage de stationnement (8) est relâché, et
dans une quatrième étape de procédé suivante, au moins un élément de commutation (C respectivement A ou B) commuté en vue du blocage par engagement par friction de la prise force (5) est à nouveau commandé ou régulé de manière à être désengagé, de sorte que la prise de force (5) puisse tourner en fonction du souhait prédéfini du conducteur.

2. Procédé selon la revendication 1, **caractérisé en ce que** la deuxième et la quatrième étape de procédé ne sont pas mises en oeuvre et sont omises lors du déroulement du procédé, lorsque la prise de force (5), sous l'effet de l'activation des éléments de commutation (A, D respectivement B, D) commandés dans la première étape de procédé, peut tourner en fonction du souhait prédéfini du conducteur.

3. Procédé selon la revendication 1 ou 2, **caractérisé en ce que** lorsque la pente de la chaussée actuelle (en degrés) est supérieure à une valeur seuil prédéfinie positive, des éléments de commutation (A, D) sont commandés dans la première étape de procédé, afin de permettre le passage d'une vitesse de marche avant de la transmission du véhicule (4).

4. Procédé selon la revendication 3, **caractérisé en ce que** la vitesse de marche avant enclenchée dans la première étape de procédé est la première vitesse de marche avant de la transmission du véhicule (4).

5. Procédé selon la revendication 3, **caractérisé en ce que** la vitesse de marche avant enclenchée dans la première étape de procédé n'est pas la première vitesse de marche avant de la transmission du véhicule (4).

6. Procédé selon l'une quelconque des revendications 1 à 5, **caractérisé en ce que** lorsque la pente de la chaussée actuelle (en degrés) est inférieure à la valeur seuil prédéfinie négative, dans la première étape de procédé, des éléments de commutation (B, D) sont commandés de manière à permettre le passage d'une vitesse de marche arrière de la transmission du véhicule (4).

7. Procédé selon l'une quelconque des revendications 1 à 6, **caractérisé en ce qu'**au moins l'un des éléments de commutation (A, D respectivement B, D) commandés dans la première étape de procédé, est commandé ou régulé en fonction de la pente de la chaussée actuelle (en degrés) et/ou en fonction d'une masse du véhicule (m) et/ou en fonction d'une température de la transmission (T) ou en fonction d'une température représentant la température de la transmission (T).

8. Procédé selon l'une quelconque des revendications 1 à 7, **caractérisé en ce que** l'élément de commutation (C respectivement A ou B) commandé dans la deuxième étape de procédé pour bloquer la prise de force (5) est commandé ou régulé en fonction de la pente de la chaussée actuelle (en degrés) et/ou en fonction d'une masse du véhicule (m) et/ou en fonction d'une température de la transmission (T) ou en fonction d'une température représentant la température de la transmission (T).

9. Procédé selon l'une quelconque des revendications 1 à 8, **caractérisé en ce que** l'élément de commutation (C respectivement A ou B) pouvant être activé dans la deuxième étape de procédé pour bloquer la prise de force (5) peut également être commuté pour passer une vitesse ou pour réaliser une multiplication dans la transmission du véhicule (4).

10. Procédé selon l'une quelconque des revendications 1 à 9, **caractérisé en ce que** lorsque la direction de serrage de la prise de force (5) effective lorsque le verrouillage de stationnement (8) est activé, est différente d'un sens de rotation de la prise de force (5) correspondant au souhait prédéfini du conducteur, un élément de commutation (A respectivement B) nécessaire pour faire démarrer le véhicule en fonction du souhait prédéfini du conducteur, est commandé initialement dans la deuxième étape de procédé.

11. Procédé selon l'une quelconque des revendications 1 à 9, **caractérisé en ce que** lorsque la direction de serrage de la prise de force (5) effective lorsque le verrouillage de stationnement (8) est activé, est différente d'un sens de rotation de la prise de force (5) correspondant au souhait prédéfini du conducteur, un élément de commutation (A respectivement B) nécessaire pour faire démarrer le véhicule en fonction du souhait prédéfini du conducteur, est commandé initialement dans la troisième étape de procédé.

12. Procédé selon l'une quelconque des revendications 1 à 11, **caractérisé en ce que** lorsque la direction de serrage de la prise de force (5) effective lorsque le verrouillage de stationnement (8) est activé, est différente d'un sens de rotation de la prise de force (5) correspondant au souhait prédéfini du conducteur, l'élément de commutation (A respectivement B) activé dans la première étape de procédé, qui n'est pas nécessaire dans la deuxième étape de procédé pour bloquer la prise de force (5), est désengagé à nouveau dans la troisième étape de procédé.

13. Procédé selon l'une quelconque des revendications 1 à 12, **caractérisé en ce qu'**une capacité de transmission des éléments de commutation (C, D respectivement A, B, D), qui sont activés dans la troisième étape de procédé pour fixer la prise de force (5), est ajustée à un niveau différent, la capacité de transmission de l'élément de commutation (C respectivement A ou B), qui est désengagé après la désactivation du verrouillage de stationnement (8), est inférieure à la capacité de transmission de l'élément de commutation (D), qui reste dans l'état activé lorsque le verrouillage de stationnement (8) est désactivé.

14. Procédé selon l'une quelconque des revendications 1 à 13, **caractérisé en ce que** dans la quatrième étape de procédé, une capacité de transmission d'au moins l'un des éléments de commutation (C respectivement A ou B) commutés en vue du blocage par engagement par friction de la prise de force (5) est réduite de telle sorte qu'un couple de précontrainte de la prise de force (5) soit réduit de manière constante.

15. Procédé selon l'une quelconque des revendications 1 à 14, **caractérisé en ce que** lorsque la pente de la chaussée actuelle (en degrés) est supérieure à la première valeur seuil prédéfinie positive et le souhait prédéfini du conducteur est une région de conduite en marche avant, aucun changement de vitesse n'a lieu dans la quatrième étape de procédé.

16. Procédé selon l'une quelconque des revendications 1 à 14, **caractérisé en ce que** lorsque la pente de la chaussée actuelle (en degrés) est supérieure à la première valeur seuil prédéfinie positive et le souhait prédéfini du conducteur est une région de conduite en marche avant, on passe à une autre vitesse de marche avant de la transmission du véhicule (4) dans la quatrième étape de procédé.

17. Procédé selon l'une quelconque des revendications 1 à 14, **caractérisé en ce que** lorsque la pente de la chaussée actuelle (en degrés) est supérieure à la première valeur seuil prédéfinie positive et le souhait prédéfini du conducteur est une région de conduite en marche arrière, on passe à une vitesse de marche arrière de la transmission du véhicule (4) dans la quatrième étape de procédé.

18. Procédé selon l'une quelconque des revendications 1 à 17, **caractérisé en ce que** lorsque la pente de la chaussée actuelle (en degrés) est inférieure à la première valeur seuil prédéfinie négative et le souhait prédéfini du conducteur est une région de conduite en marche avant, on passe à une vitesse de marche avant de la transmission de véhicule (4) dans la quatrième étape de procédé.

19. Procédé selon la revendication 18, **caractérisé en ce que** la vitesse de marche avant enclenchée dans la quatrième étape de procédé est la première vitesse de marche avant de la transmission de véhicule (4).

20. Procédé selon la revendication 18, **caractérisé en ce que** la vitesse de marche avant enclenchée dans la quatrième étape de procédé n'est pas la première vitesse de marche avant de la transmission de véhicule (4).

21. Procédé selon l'une quelconque des revendications 1 à 20, **caractérisé en ce que** lorsque la pente de la chaussée actuelle (en degrés) est inférieure à la première valeur seuil prédéfinie négative et le souhait prédéfini du conducteur est une région de conduite en marche arrière, on n'effectue aucun changement de vitesse dans la quatrième étape de procédé.

22. Procédé selon l'une quelconque des revendications 1 à 21, **caractérisé en ce que** dans la première et/ou la deuxième étape de procédé, on prévoit une augmentation de régime (n_mot) d'un moteur d'entraînement (2) de la chaîne cinématique (1) à une valeur supérieure à un régime de marche à vide (n_LL) du moteur d'entraînement (2) et/ou une augmentation du couple du moteur d'entraînement (2) de la chaîne cinématique (1) à une valeur supérieure à un couple de marche à vide du moteur d'entraînement (2).

23. Procédé selon la revendication 22, **caractérisé en ce que** l'augmentation de régime (n_mot) et/ou du couple du moteur d'entraînement (2) s'effectue en fonction de la pente de la chaussée actuelle (en degrés) et/ou de la masse du véhicule (m) et/ou de la température de la transmission (T) ou de la température représentant la température de la transmission (T) et/ou de paramètres de l'élément de démarrage (3) ou du convertisseur de couple de la transmission (4).

24. Procédé selon l'une quelconque des revendications 1 à 23, **caractérisé en ce que** le procédé est interrompu prématurément et le verrouillage de stationnement (8) est immédiatement désenclenché et si cela est nécessaire, on passe simultanément à la vitesse correspondant au souhait prédéfini du conducteur, lorsqu'une force de débrayage du verrouillage de stationnement (8) est supérieure à une valeur prédéfinie.

25. Procédé selon l'une quelconque des revendications 1 à 24, **caractérisé en ce que** le procédé, après la première étape de procédé, une fois la détente maximale possible du verrouillage de stationnement (8) atteinte, est interrompue prématurément et le verrouillage de stationnement (8) est désenclenché immédiatement et - si cela est nécessaire- l'on passe simultanément à la vitesse correspondant au souhait prédéfini du conducteur, si la pente de la chaussée actuelle (en degrés) est supérieure à une deuxième valeur seuil positive ou est inférieure à une deuxième valeur seuil négative, la deuxième valeur seuil positive de la pente de la chaussée actuelle (en degrés) étant supérieure à la première valeur seuil positive de la pente de la chaussée actuelle (en degrés), et la deuxième valeur seuil négative de la pente de la chaussée actuelle (en degrés) étant inférieure à la première valeur seuil négative de la pente de la chaussée actuelle (en degrés).

26. Procédé selon l'une quelconque des revendications 1 à 24, **caractérisé en ce que** le procédé, avant la première étape de procédé, est interrompu et le verrouillage de stationnement (8) est désenclenché immédiatement si la pente de la chaussée actuelle (en degrés) est supérieure à une deuxième valeur seuil positive ou est inférieure à une deuxième valeur seuil négative, la deuxième valeur seuil positive de la pente de la chaussée actuelle (en degrés) étant supérieure à la première valeur seuil positive de la pente de la chaussée actuelle (en degrés), et la deuxième valeur seuil négative de la pente de la chaussée actuelle (en degrés) étant inférieure à la première valeur seuil négative de la pente de la chaussée actuelle (en degrés).

27. Procédé selon l'une quelconque des revendications 1 à 26, **caractérisé en ce que** la première et/ou la deuxième valeur seuil positive et/ou la première et/ou la deuxième valeur seuil négative de la pente de la chaussée actuelle (en degrés) sont prédéfinies sous forme de valeurs fixes.

28. Procédé selon l'une quelconque des revendications 1 à 26, **caractérisé en ce que** la première et/ou la deuxième valeur seuil positive et/ou la première et/ou la deuxième valeur seuil négative de la pente de la chaussée actuelle (en degrés) sont prédéfinies en fonction de la masse du véhicule (m) ou sont déterminées de manière adaptative.

29. Procédé selon l'une quelconque des revendications 1 à 28, **caractérisé en ce que** la pente de la chaussée actuelle (en degrés) est déterminée au moyen d'un capteur de pente fixé au véhicule.

30. Procédé selon l'une quelconque des revendications 1 à 28, **caractérisé en ce que** la pente de la chaussée actuelle (en degrés) est déterminée au moyen d'un système de navigation du véhicule assisté par une carte géographique.

31. Procédé selon l'une quelconque des revendications 1 à 30, **caractérisé en ce que** la masse du véhicule (m) est prédéfinie fixement en tant que valeur prédéfinie.

32. Procédé selon l'une quelconque des revendications 1 à 30, **caractérisé en ce que** la masse du véhicule (m) est une valeur adaptative, qui peut se rapprocher d'une masse de véhicule actuelle, en tenant compte d'une ou plusieurs des fonctions suivantes ou d'un ou plusieurs des paramètres suivantes :
• comparaison d'une accélération théorique du véhicule avec une accélération effective du véhicule déterminée avant la dernière activation du verrouillage de stationnement (8) ;
• taux d'élasticité d'un ressort de châssis en liaison avec des courses de suspension actuelles individuelles pour chaque roue ou essieu sur le châssis du véhicule ;
• valeurs de pression individuelles pour chaque roue d'une suspension pneumatique du véhicule ;
• signalement d'une régulation du niveau d'un essieu du véhicule ;
• prise en compte d'une masse possible d'une remorque en tant que valeur prédéfinie fixement de manière permanente ;
• prise en compte d'une masse de remorque seulement lorsque la présence d'une remorque est détectée.

33. Transmission de véhicule (4) comprenant plusieurs éléments de commutation (A à E) pour mettre en oeuvre plusieurs multiplications, comprenant un verrouillage de stationnement (8) pour la fixation par engagement positif d'une prise de force (5) d'une chaîne cinématique (1), qui peut être activée par le biais d'un dispositif de commande en fonction d'un souhait prédéfini du conducteur, au moins un élément de commutation à engagement par friction étant prévu, lequel permet de bloquer en outre par engagement par friction la prise de force (5) lorsque le verrouillage de stationnement (8) est activé, ainsi qu'une commande pour désactiver le verrouillage de stationnement (8) et pour commander les éléments de commutation (A à E), **caractérisée en ce que**
grâce à la commande, lorsqu'un souhait prédéfini du conducteur de désactivation du verrouillage de stationnement (8) est détecté, tandis qu'une pente de la chaussée actuelle (en degrés) est supérieure à une première valeur seuil prédéfinie positive ou est inférieure à une première valeur seuil prédéfinie négative,
dans une première étape de procédé, pour désactiver le verrouillage de stationnement (8) en fonction du signe de la pente de la chaussée actuelle (en degrés), des éléments de commutation (A, D respectivement B, D) sont amenés en mode de glissement dans une combinaison telle que la prise de force (5) tourne à l'encontre de sa direction de serrage agissant lorsque le verrouillage de stationnement (8) est activé, jusqu'à ce qu'un serrage au niveau de l'élément de blocage par engagement positif du verrouillage de stationnement, soit au moins en partie réduit,
dans une deuxième étape de procédé suivante pour désactiver le verrouillage de stationnement (8), au moins un élément de commutation (C respectivement A ou B) pouvant être activé pour bloquer la prise de force (5), peut être activé de manière supplémentaire,
dans une troisième étape de procédé suivante de la commande pour désactiver le verrouillage de stationnement (8), l'engagement positif du verrouillage de stationnement (8) est relâché, et
dans une quatrième étape de procédé suivante, au moins un élément de commutation (C respectivement A ou B) commuté en vue de bloquer par engagement par friction la prise force (5), est à nouveau commandé ou régulé en vue d'être désengagé, de sorte que la prise de force (5) puisse tourner en fonction du souhait prédéfini du conducteur.

34. Transmission de véhicule selon la revendication 33, **caractérisée en ce que**, grâce à la commande, l'élément de commutation (C respectivement A ou B) par engagement par friction prévu dans la deuxième étape de procédé pour fixer la prise de force (5), est prévu pour mettre en oeuvre une multiplication dans la transmission automatique (4), et un autre élément de commutation (D) est activé pour fixer la prise de force (5).

35. Transmission de véhicule selon l'une quelconque des revendications 1 à 34, **caractérisée en ce que** le verrouillage de stationnement (8) est réalisé avec une roue de verrouillage de stationnement et un cliquet de verrouillage, le cliquet de verrouillage pouvant s'engager par engagement positif dans une denture de la roue de verrouillage de stationnement.

36. Transmission de véhicule selon l'une quelconque des revendications 1 à 35, **caractérisée en ce que** le verrouillage de stationnement (8) est disposé à l'intérieur d'une boîte de transmission de la transmission de véhicule (4), un élément de verrouillage du verrouillage de stationnement (8) pouvant être amené en liaison fonctionnelle avec un arbre de prise de force (10) de la transmission du véhicule (4) en vue de fixer la prise de force (5).

37. Transmission de véhicule selon l'une quelconque des revendications 1 à 35, **caractérisée en ce que** le verrouillage de stationnement (8) est disposé à l'extérieur d'une boîte de transmission de la transmission de véhicule (4), un élément de verrouillage du verrouillage de stationnement (8) pouvant être amené en liaison fonctionnelle avec un arbre de prise de force (10) de la transmission du véhicule (4) en vue de fixer la prise de force (5).
